# EUROPEAN PATENT SPECIFICATION

(11) **EP 3 091 880 B1**
(45) Date of publication and mention of the grant of the patent: **27.02.2019**
(21) Application number: 14828357.5
(22) Date of filing: 29.12.2014
(51) Int. Cl.: A47J 31/06, B65D 85/804

(54) **PAD FOR USE IN A COFFEE MAKER**
PAD ZUR VERWENDUNG IN EINER KAFFEEMASCHINE
DOSETTE À UTILISER DANS UNE MACHINE À CAFÉ

(30) Priority: 08.01.2014 NL 2012064
(43) Date of publication of application: 16.11.2016
(73) Proprietor: Koninklijke Douwe Egberts B.V., 3532 AD Utrecht (NL)
(72) Inventor: RODGERS, Brendyn Murray, NL-3532 AD Utrecht (NL); VAN MARLE, Niels, NL-3532 AD Utrecht (NL)
(74) Representative: V.O.
(86) International application number: PCT/NL2014/050914
(87) International publication number: WO 2015/105411

(56) References cited:
- EP-A1- 2 594 170
- WO-A1-2006/043096
- WO-A1-2014/007639

## Description

The invention relates to a pad for use in a coffee-maker for preparing 1 or 2 cups of beverage, provided with an envelope with an inner space which is filled with a beverage preparation product for preparing the beverage, wherein the beverage preparation product comprises a product to be extracted with a fluid and/or possibly a product soluble in a fluid, wherein the envelope is formed by a first disc-shaped sheet and a second disc-shaped sheet which are interconnected adjacent their longitudinal edges, wherein the interconnected parts of the first sheet and the second sheet form a sealing seam and wherein the first sheet and the second sheet each form a filter which can pass the fluid and which forms a barrier to the beverage preparation product, wherein, in use, with the coffee-maker a fluid such as water is supplied, under pressure, to the pad so that the fluid is pressed through the pad for obtaining a beverage which thereupon leaves the pad.

The invention further relates to a method for manufacturing such a pad.

The invention furthermore relates to a system provided with a coffee-maker and such a pad, wherein the coffee-maker is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid inflow openings so that the fluid is supplied under pressure to the first sheet of the pad so that the fluid is pressed through the pad for the preparation of the beverage in the pad, wherein the beverage leaves the pad via the second sheet to proceed to leave the holder via the at least one beverage outflow opening. Also, the invention relates to the use of such a pad and a method for preparing a beverage with the pad. Such a pad, such a system and such a use and method are known per se from EP 0 904 717 A1. In EP 0 904 717 Al the beverage preparation product consists of ground coffee. Furthermore, the first sheet and the second sheet are each made of filtering paper. The invention contemplates the provision of an improved pad.

Document WO 2014/007639 A1 discloses a pad for use in a coffee-maker for preparing 1 or 2 cups of beverage.

Document WO 2006/043096 A1 discloses with Fig. 5 and respective passage 17, lines 9 ff. a pad having a dispersion plate for directing water in a horizontal way within the pad and, further, for providing turbulences within the pad bonded to the sheet 12 of filter paper.

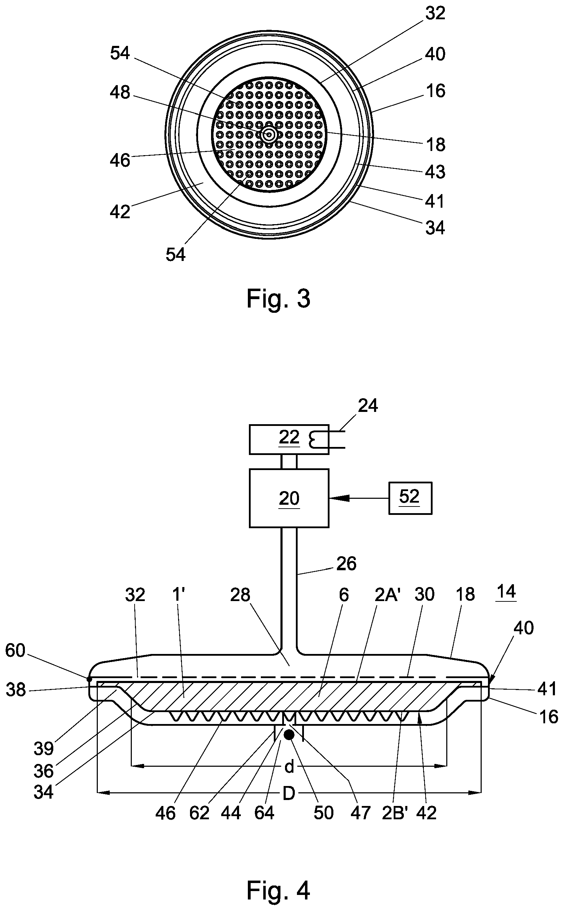

Document EP 2 594 170 A1 discloses a pad having a lid 41, wherein this lid is configured to have a double layer structure including a non-water permeable first sheet member 42, and a water permeable second member 43 laminated on this first sheet member 42 (see paragraph [0028] ff. and Fig. 4). According to paragraph [0029] said first sheet member 42 is formed of a single layer or multilayer resin film.

According to the invention, it holds that the first sheet and/or the second sheet is having at least one sheet portion comprising a coated enforcement layer of a binder material in such a way that it provides at least locally a reinforced area for providing a form-retaining design to the respective sheet. Herein, for ease of understanding, the above "first sheet and/or the second sheet" are referred as "at least one sheet" or "the sheet" if not otherwise mentioned or obvious from the respective before mentioned passage(s).

The invention is based on the insight that the known pad, when it has been placed in a holder of the coffee-maker by a user, may sometimes be slightly deformed. This can happen because the known pad is of flexible and supple design and, for instance, may be taken from its package in slightly deformed condition. If the known pad has been placed in the holder, a user should take care that the pad in the holder has its original shape so that the second sheet of the pad extends over a bottom of the holder up to the upstanding sidewall of the holder. If he doesn't, the risk of bypass is increased. Bypass means that the fluid being supplied under pressure to the first sheet of the pad will flow in part around the pad to a beverage outflow opening which is provided in a bottom of the holder on which the pad rests. All this has as a consequence that not the complete amount of fluid being supplied to the first sheet of the pad will flow to the beverage outflow opening of the holder via the pad. A consequence is that the beverage which is received in, for example, a cup, is diluted with the fluid. The invention contemplates facilitating the use of a pad. As according to the invention the first and/or the second sheet are of form-retaining design, the pad can be placed in the holder without relevant deformation which increases the risk of bypass. Moreover, it appears that owing to the at least one sheet being form-retaining, a distribution of the beverage preparation product in the envelope of the pad varies little from one pad to another. This in turn has as an advantage that upon forcing the fluid through the pad a beverage is obtained whose properties are well-defined in advance. Also, it appears in many variants of the form-retaining pad according to the invention that an anti-drip effect occurs. That is, directly after use the pad can be taken from a machine while the chance that drops fall off the pad has been reduced.

On aspect of the invention is to provide a pad comprising at least one sheet having at least one sheet portion comprising a coated enforcement layer of a binder material in such a way that it provides at least locally a reinforced area for providing a form-retaining design to the respective sheet. Providing said enforcement layer is reliably and cost effectively possible. In addition, as explained below, providing a coated enforcement layer has some further advantages.

Preferably it holds that the ground material of the sheet comprising the enforcement layer is of flexible design, retaining the form retaining ability by application of the enforcement layer. As a ground material paper sheets, filter sheets with flexible abilities and other known sheets of similar kind can be used. Also the sheets and the ground materials of sheets explained further below are applicable.

Preferably it holds that the enforcement layer is applied in such a way that it provides at least locally reinforced areas on the envelope with regard to the rigidity of the envelope. Based on these enforcement areas form-retaining ability of the pad can reliably be provided.

In general it has to be mentioned that use of the enforcement layer can provide preferably one of multiple methods for providing a form-retaining sheet or a form-retaining pad respectively. Other methods are applicable in parallel, wherein than the different methods are interacting with each other providing a pad for reliable preparation of a beverage.

Preferably it holds that the enforcement layer is applied to the sheet portion after manufacturing of the sheet. With other words the enforcement layer is applied on a prefabricated sheet and preferably sheet material, which is then or during the application formed to a part of the pad and/or assembled with other parts to form such a pad. Especially in this regard it preferably holds that the enforcement layer is applied to the sheet portion before assembling the pad and especially before interconnecting the sheets. This eases the application process on the sheet.

According to the invention the enforcement layer is applied to the sheet portion by spraying or a similar solution discharging method and/or is printed and especially ink-jetted to the sheet portion. This guaranties a fast and cost effective "enforcing process" and further a reliably and accurate application of the binder material.

Especially in this regard it is further possible that the enforcement layer is further provided as a design, brand, or similar graphic element, Further additional embodiments of the enforcement layer are described below.

Preferably it holds that the enforcement layer is applied as a solution comprising the binder material and especially chemical binders. It is further preferred that the enforcement layer is applied as a solution comprising film forming polymers. With one embodiment, providing enforced form retaining ability, it preferably holds that the enforcement layer is applied to the sheet portion in such a way that the binder material is crosslinking fibers or similar material components of the sheet portion material. This crosslinking can be based on a chemical and/or a mechanical linkage, dependent on the binder material or binder materials used respectively.

Preferably it holds that the enforcement layer comprises a food-grade binder material. The respective abilities are preferably preserved und beverage preparation temperatures, i.e. when the enforcement layer and the binder material respectively comes into contact with a fluid having a temperature of 80 degrees Celsius, more particularly of 90 degrees Celsius and preferably of 99 degrees Celsius. It turned out that use of a food-grade binder provides improved form-retaining abilities in combination with a cost-effective manufacturing process.

Preferably it holds that the enforcement layer comprises binder material with dye and/or colouring pigments. By these specification applying design, brand or similar graphic elements is easily possible.

Preferably it holds that the enforcement layer is homogeneously applied to the sheet portion. Beside the positive effects on the produced pad and in detail to the rigidity of the used sheets, preparation of the beverage is positively influences as a homogenous fluid passing is guaranteed. Further the enforcement layer can here be especially mechanically applied to the respective sheets in a very effective and especially fast way. In general applying can be performed by spraying, bathing, by fluid curtains, printing etc. It has to be mentioned that the enforcement layer can be applied to the respective sheet or the respective sheet portion on one or on both sides, i.e. an inner side, with regard to the inner space of the pad produced, and/or an outer side. Preferably it holds that the enforcement layer covers the whole first sheet and/or the second sheet.

Preferably it holds that the binder material is applied as a water-based coating. This coating, also called dispersion coatings dry physically by means of the absorption of the coating into the substrate and the evaporation of water. It is also possible to use an ink having binding and when dried form-retaining abilities. In general drying of the applied binder material can be achieved through hot air and/or infrared or similar draying methods. Also air-drying is applicable. With the drying, here water is extracted from the coating, wherein polymer particles approach each other and form the enforcement layer in form of a film. Preferably a water-base coating is used comprising low migration abilities and especially falling below the global migration limit of 60 mg/kg (EU cube model). Many of them are certified for the direct contact to foodstuffs. Preferably the coating contains only contain those raw materials that are specified in the positive list (SR 817.023.21) In addition the coatings preferably do not comprise unrequested constitutional components, such as heavy metals, phthalates and mineral oils (MOAH, MOSH).

Preferably it holds that the binder material comprises milk proteins. The produced enforcement layer shows good tensile strength and moderate elongation, however providing flexibility.

Preferably lipids are incorporated to the binder material and especially to a protein based layer, preferably either in an emulsion or as a coating.

Preferably it holds that the binder material comprises Chitosan. Chitosan is a biodegradable polymer derived from natural resources, e.g. extracted from chitin. Especially in this regard a binder material is used having an antibacterial and/or antifungal property qualified for food protection. In general chitosan and all other mentioned binder materials can be used isolated or in combination and especially in combination with natural polymers, such as starch and other ingredients for example essential oils and clay. For increases especially the mechanical properties the binder material and especially chitosan is preferably blended with at least one origin of starch. An enforcement layer having antimicrobial abilities can preferably be made from chitosan blended with essential oils and clays

Preferably it holds that the binder material comprises polyvinyl alcohol (PVOH). Polyvinyl alcohol is a synthetic polymer prepared by the polymerisation of vinyl acetate, followed by a controlled hydrolysis of acetate moieties.

Preferably it holds that the binder material comprises at least one binder known on the market under the following brands: Freshseel(™), Fry Shiled(™), Natrue Seal(™), Nutrasave(™), Opta Glaze(™), Seal gum(™), Spray gum(™), Semperfresh(™), Z Coat(™).

Preferably it holds that the binder material is comprising binders chosen from the group comprising sucrose esters, calcium pectinate, calcium ascorbate, N,O-carboymethyl chitosan, wheat gluten, calcium acetate, corn protein. Preferably it also holds that the binder material is comprising binders chosen from the group comprising polymers of resin, sugar, cocoa solids, whitener, whey protein, starch, propylene glycol alginate, guar gum, hydroxyl propylmethyl cellulose (HPMC), hydroxyl ethyl cellulose polyethylene glycol, pullulan, carbohydrates, galactomannane.

Preferably it holds that the enforcement layer extends at least partly over the filter formed by the first sheet and/or the second sheet. It can especially be applied to portion of the respective sheet where enforcement of the sheet and/or of the pad is relevant. Especially in this regard preferably it holds that the enforcement layer extends at least partly in a line and especially a mesh structure or a similar pattern structure over the envelope. Further preferably it holds that the enforcement layer is arranged in bands or similar lines extending in radial direction of the pad and/or a circumferential direction, especially closed upon itself, extending around an axial axis of the pad, for instance in the sealing seam or with regard to the central axis inside of the sealing seam having a smaller diameter than the sealing seam. By such an arrangement preferably the permeability of the sheet and especially the pad can be controlled.

Preferably it holds that the enforcement layer is arranged in such a way that it comprises inlet openings for the fluid to enter the inner space of the pad. Further preferably it holds that the enforcement layer is arranged in such a way that it comprises outlet openings for the fluid to leave the inner space of the pad. Especially in this regard it preferably holds that the enforcement layer is arranged in a pattern structure to provide the inlet and/or the outlet openings.

Preferably it holds that the enforcement layer is applied in such a way that pores and similar openings in the raw sheet material of the sheet portion for the fluid to pass, are at least party closed by the binder material.

Preferably it further holds that the sheet portions comprising the binder material are arranged at areas of the envelope where no fluid permeability is required, preferably at the sealing seam area and/or at vertical wall areas of the envelope.

Preferably it holds that the first and/or the second sheet is shaped such that it is provided with at least one groove or a multiplicity of grooves to increase the form retention of the second sheet, the grooves for instance extending in radial direction of the pad and/or the at least one groove constituting a circumferential groove closed upon itself, extending around an axial axis of the pad, for instance in the sealing seam or within the sheet outside the sealing seam so that the groove has a smaller diameter than the sealing seam. This provides a form-retaining or form-enforced sheet and therefore a form-retaining or form-enforced pad also without the applied enforcement layer. With regard to said grooves preferably it holds that the enforcement layer is at least partly arranged along and especially in and/or on the grooves. Here the layer can e.g. be applied in bands or similar shaped following at least partly the grooves. The enforcement layer can be applied in to the grooves and/or on top of the grooves, side-pathing the grooves, on side and/or on both sides etc.

With regard to the grooves it preferably holds that the sheet comprising the grooves is formed like the bowl of a cup cake, comprising especially meandering grooves extending form a central area to the rim portions of the bowl, ending up in or before the sealing seam.

Preferably it holds that the at least one sheet comprising the above disclosed enforcement layer also comprises any one of the following specifications, regarding to a sheet. However it is also possible that a sheet which does not comprise an enforcement layer as mentioned above is arranged as explained in the following. E.g. and in detail this can be provided with an arrangement, where a first sheet has the below features with regard to enforcement and the second sheet has the above disclosed enforcement layer only or is arranged with the below features additionally, or vice versa. Also both sheets can be provided with the above and the below features. It turned out that especially the combination of the features mentioned herein has a positive effect on the form-retaining ability, on the quality of the beverage produced and the overall impression of the pad.

The below features can be provided to the pad and to at least on sheet respectively:
Preferably, it holds that the at least one sheet also remains form-retaining when a fluid such as the beverage is flowing through it, while the fluid can have a temperature of at most 80 degrees Celsius, more particularly at most 90 degrees Celsius, and preferably at most 99 degrees Celsius. This has as a consequence that also after use, hence after the pad has been subject to flow-through of fluid that will generally have a high temperature, when, for example, coffee or tea is being prepared, it will still be form-retaining. If the at least one sheet after use is still form-retaining, the pad can more easily be removed from the holder by the user in that the user has a better grip of the pad. Preferably, it holds, to this end, that the the at least one sheet is made of a thermoplastic material. A thermoplastic material is a material that becomes more plastic as the temperature rises. Preferably, it holds then that the first sheet also remains form-retaining when it comes into contact with a fluid having a temperature of 80 degrees Celsius, more particularly of 90 degrees Celsius and preferably of 99 degrees Celsius.

In particular, it holds that the at least one sheet is made of a nonwoven material. In order for the at least one sheet to be form-retaining, it holds here in particular that the nonwoven material consists of a plastic for at least 50-70 percent by weight, while in particular the plastic consists of plastic fibers and/or plastic filaments. To put it differently, in order for the at least one sheet to be form-retaining, it holds here on balance, in particular, that the nonwoven material consists of a plastic for at least 50 percent by weight, while in particular the plastic consists of plastic fibers and/or plastic filaments.

More particularly, it holds here that the nonwoven material consists of a plastic for at least 60-70 percent by weight, or for at least 70 percent by weight, while in particular the plastic consists of plastic fibers and/or plastic filaments. Stated differently, in order for the at least one sheet to be form-retaining, it holds here on balance, more in particular, that the nonwoven material consists of a plastic for at least 60 percent by weight, while in particular the plastic consists of plastic fibers and/or plastic filaments.

More preferably, it holds that the nonwoven material consists of a plastic for at least 70 percent by weight, preferably for at least 80 percent by weight, and more preferably for at least 90 percent by weight. The nonwoven material can here be present in a form of fibers and/or in a form of filaments.

Preferably, it holds that the at least one sheet consists of a plastic for 50--100 percent by weight. On balance it holds therefore that preferably the at least one sheet consists of a plastic for 50-100 percent by weight. Here it holds in particular that the plastic consists of plastic fibers and/or plastic filaments.

More preferably, it holds that the at least one sheet consists of a plastic for 60-100 percent by weight.. Here it holds in particular that the plastic consists of plastic fibers and/or plastic filaments.

Still more preferably, it holds that the at least one sheet consists of a plastic for 70-100 percent by weight, in particular consists of plastic for 75-95 percent by weight and more in particular consists of plastic for 80-95 percent by weight. Here it holds in particular that the plastic consists of plastic fibers and/or plastic filaments.

An advantage of a nonwoven material is that it can form a good fluid sealing with the holder when the nonwoven material is moist as a result of the supply of the fluid. When the nonwoven material is made of a plastic at least for a part, it may typically have been made form-retaining through a heat treatment. The plastic can consist, for example, of polymers which comprise PE, PET, PETP, coPET, LLDPE, CPP, PLA and/or PP. The plastic is present in the nonwoven material in the form of, for instance, plastic fibers and/or plastic filaments.

In particular, it holds that the at least one sheet is furthermore provided with cellulose fibers and/or cellulose filaments. Still more in particular, the at least one sheet consists of the above-mentioned plastic fibers and/or plastic filaments and the cellulose fibers and/or cellulose filaments. The nonwoven material can thus consist of a combination of plastic fibers and/or plastic filaments and cellulose fibers and/or cellulose filaments. Also, it may be that the cellulose fibers are covered with a plastic coating. An advantage of the embodiments mentioned is that the at least one sheet has the optical properties of filtering paper more, while yet being form-retaining. This last may be so because, measured in percent by weight, more plastic or plastic fibers and/or plastic filaments are present than cellulose fibers and/or cellulose filaments, while, in particular, the nonwoven material has undergone a heat treatment to increase form retention.

It preferably holds that the at least one sheet is made more form-retaining by means of calendering.

According to a practical embodiment, it preferably holds that the density of the at least one sheet without the binder material is in the range of 30-150 g/m2, preferably in the range of 40-100 g/m2 and more preferably in the range of 50-80 g/m2 and/or that the density of the enforcement layer is in the range of 40-500 g/m2, preferably in the range of 100-400 g/m2.

At these densities, the form retention concerned can be realized well. In particular, it holds that the at least one sheet is made of a polyester fiber, in particular of Smash™ material. Preferably, it holds that the at least one sheet is made of SMASH™ 200 g/m2.

It preferably holds that the thickness of the at least one sheet is in the range of 50-500 µm, preferably in the range of 100-500 µm, more preferably in the range of 110-350 µm and still more preferably in the range of 150-300 µm.

In particular, it holds alternatively that the at least one sheet is made of Polylactic Acid (PLA) fibers. It preferably holds that the at least one sheet is made of PLA 30-90 g/m2, preferably PLA 40-80 g/m2, more preferably PLA 600 or 70 g/m2. Here it preferably holds that the thickness of the at least one sheet is 100-600 µm.

Also, it holds preferably that the at least one sheet is made of <100% Polylactic Acid (PLA) fibers and possibly derivatives. Owing to this, the at least one sheet is at least substantially completely biodegradable after use.

In this application, form retention can for instance be defined as follows. The form retention of the at least one sheet according to a test is expressed in a force, measured during the test, that is exerted on the at least one sheet, while the test is carried out on the sheet as such, that is, on the pad without the other sheet and the beverage preparation product but with preservation of its shape such as when the sheet forms part of the pad. For carrying out the test, the sheet as such, that is, the pad without the other sheet and the beverage preparation product, is laid on a horizontal surface, such that the sheet is supported by its longitudinal edge on the horizontal surface, the horizontal surface provided with an elongated groove having a width of 30 mm and the sheet, symmetrically with respect to the groove, overlying the groove and supported on opposite sides of the groove on the horizontal surface, while in carrying out the test use is made of a knife having a length corresponding to the diameter of the pad, a cutting face of the knife having a thickness of 3 mm and a length direction of the cutting face extending in horizontal direction in a length direction of the groove, wherein for testing, the knife from a position above the pad is moved down in vertical direction with a constant speed of 100 mm/minute, a center of the cutting face situated, viewed in vertical direction, above a center of gravity of the sheet, and wherein from the moment that the knife touches the sheet the resistance in units Newton is measured that the knife experiences as a result of the deforming of the pad by the knife as the knife moves down and wherein the moving down is continued until the cutting face of the knife is in the groove at a 12 mm depth with respect to the horizontal surface and wherein a measured highest resistance is the measure of the bending stiffness of the sheet.

According to a preferred embodiment of the pad, the highest resistance measured according to the test, that is, the highest measured force in Newton, is in the range of 0.2-4 Newton, and/or the highest measured force in the test, is greater than 1 Newton.

In this application the thickness of a sheet is defined according to NEN-EN-ISO 53-2011.

In addition, it can be effected that the thickness of the at least one sheet is in the range of 50-500 micrometer (µm), preferably in the range of 100-500 micrometer, preferably in the range of 110-350 micrometer, more preferably in the range of 150-300 micrometer. What is thus effected is on the one hand that the at least one sheet is not too heavy and on the other hand also that the at least one sheet is well permeable to the fluid. In particular, it holds here that when the fluid is being caused to flow through the pad, a pressure drop across the beverage preparation product is greater than a pressure drop across the at least one sheet, in particular 10 times greater, more particularly 20 times greater. The thickness of the other sheet can be, for example, 1.4-10 times smaller than the thickness of the at least one sheet.

More particularly, it holds here that the first sheet and the second sheet are manufactured from a same sheet or same sheets. If the first sheet and the second sheet have undergone a heat treatment for making the sheet form-retaining, in that case, preferably, the heat treatment will also be the same, so that the first sheet and the second sheet have the same properties.

In particular, it holds that the part of the second sheet that is situated within the contours of the sealing seam is of dish-shaped design, while, in particular, the first sheet is of flat design. This has as an advantage that the coffee pad is self-locating when it is placed in a holder having a shape corresponding to the pad. The intention is then for the second sheet to come to rest on the bottom of such a holder.

It is also possible that the part of the first sheet that is situated within the contours of the sealing seam is also of dish-shaped design and especially similar or identical to the design of the second sheet. Preferably it holds in this regard that the pad is provided as a symmetrical pad, wherein the first sheet and the second sheet having principally the same shape.

The system according to the invention is, to that end, provided with a coffee-maker which is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid openings so that the fluid is supplied under pressure to the first sheet of the pad so that the fluid is pressed through the pad for the preparation of the beverage in the pad, the beverage leaving the pad via the second sheet to proceed to leave the holder via the at least one beverage outflow opening.

Preferably, it holds here that the holder is provided with a bowl-shaped inner space, which is bounded by the bottom and an upstanding sidewall of the holder, wherein the bottom consists of an outer horizontally directed ring-shaped bottom part which adjoins the sidewall and an inner dish-shaped bottom part, wherein the dish-shaped bottom part adjacent the ring-shaped bottom part slopes downwards in a direction directed away from the sidewall and wherein the at least one outflow opening is provided in the dish-shaped bottom part. As mentioned, the pad rests on the bottom, while the second sheet extends along the bottom to near the upstanding edge. Preferably, the sealing seam of the pad then rests on the ring-shaped bottom part. In particular, it holds here that in the dish-shaped bottom part grooves are provided which form a fluid path to the at least one beverage outflow opening, while the grooves extend exclusively under the beverage preparation product in the pad. The portion of the bottom that is not provided with grooves, more particularly the ring-shaped bottom part, can then form a fluid sealing with that portion of the second sheet that rests on said areas of the bottom when the pad becomes moist through the fluid.

In particular, it holds that the at least one outflow opening is provided with a nozzle for generating a jet of the beverage. With the aid of the jet, in a manner known per se, air can be beaten into the prepared beverage for obtaining a beverage with a fine-bubble foam layer when it has been received in, for example, a cup. To this end, the system may for instance be provided with an impact surface impacted by the jet for beating air into the beverage to obtain a beverage with a fine-bubble foam layer.

In particular, it holds that the fluid is supplied to the first sheet with a pressure of 0.9 to 1.5 bar above atmospheric pressure. At this relatively low pressure, still a beverage with a good fine-bubble foam layer can be obtained that is comparable to beverages that are prepared under high pressure, as is the case with a coffee bed through which hot water is caused to flow under a pressure in excess of 10 bar.

The pad according to the invention is filled with a beverage preparation product for preparing beverage, the beverage preparation product comprising a product to be extracted with a fluid (and/or a product soluble in a fluid). The product to be extracted with a fluid can consist of, for example, ground coffee or tea-leaves. A product soluble in a fluid can consist of, for example, milk powder, chocolate milk powder and the like.

According to a particular embodiment of the system according to the invention, the system is further provided with a known coffee pad (such as a prior art coffee pad as defined in EP 904 717 A1) provided with an inner space which is filled with ground coffee, wherein the inner space is formed by a top sheet and a bottom sheet which are interconnected adjacent their longitudinal edges, wherein the top sheet and the bottom sheet also form an outer side of the pad and are each made of flexible filtering paper and wherein the coffee pad and the holder are tailored to each other so that the coffee pad can be received in the holder for preparing coffee, such that, in use, the fluid is supplied under pressure to the top side of the pad and is pressed through the pad so that the fluid flows through the top sheet, whereby in the pad a coffee extract is formed which proceeds to leave the pad via the bottom sheet and wherein the coffee extract proceeds to flow out of the holder via the beverage outflow opening of the holder. With such a system, a user can therefore use, as desired, the known coffee pad and the pad with the form-retaining the at least one sheet in one and the same coffee-maker.

The invention also relates to a a system provided with the inventive pad as disclosed herein and a coffee-maker, wherein the coffee-maker is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid openings so that the fluid is supplied under pressure to the first sheet of the pad so that the fluid is pressed through the pad for the preparation of the beverage in the pad, the beverage leaving the pad via the second sheet to proceed to leave the holder via the at least one beverage outflow opening.

The invention also relates to the use of the inventive pad as disclosed herein, wherein the pad is placed in a holder which is provided with at least one beverage outflow opening, the holder with the pad therein is closed off with a cover which is provided with at least one fluid inflow opening, and a fluid is supplied under pressure to the at least one fluid inflow opening so that the fluid is supplied via the first sheet to the beverage preparation product in the pad for preparing the beverage and wherein the beverage leaves the pad via the second sheet, wherein the beverage proceeds to leave the holder via the at least one beverage outflow opening.

The invention further relates to a method for preparing a beverage with the inventive pad as disclosed herein, wherein the pad is placed in a holder which is provided with at least one beverage outflow opening, the holder with the pad therein is closed off with a cover which is provided with at least one fluid inflow opening, and a fluid is supplied under pressure to the at least one fluid opening so that the fluid is supplied via the first sheet to the beverage preparation product in the pad for preparing the beverage and wherein the beverage leaves the pad via the second sheet, wherein the beverage proceeds to leave the holder via the at least one beverage outflow opening.

The invention also relates to a method for making the inventive pad as disclosed herein, wherein in step a. a set-up of a third sheet, fourth sheet and the beverage preparation product is made, with the beverage preparation product situated between the third sheet and the fourth sheet, and then in step b. the third sheet and the fourth sheet are joined together, thereby forming the sealing seam so that the beverage preparation product is included in the inner space characterized in that in a step h. an enforcement layer comprising a binder material is applied to a sheet portion of the first sheet and/or the second sheet in such a way that it provides at least locally reinforced areas.

The invention also relates to a method for making the inventive pad as disclosed herein, wherein in step a. a set-up of a third sheet, fourth sheet and the beverage preparation product is made, with the beverage preparation product situated between the third sheet and the fourth sheet, and then in step b. the third sheet and the fourth sheet are joined together, thereby forming the sealing seam so that the beverage preparation product is included in the inner space, wherein the third sheet is made of the same material as the first sheet or the second sheet and wherein the fourth sheet is made of the same material as the other one of the first sheet or the second sheet, characterized in that the fourth sheet and/or the second is calendered in a step g. for increasing the bending stiffness of the fourth sheet, wherein step g. is carried out before step a. and before step b.

For redundancy reasons further specifications of said use and methods are omitted here wherein all these specifications can be taken from the passages dealing with the inventive system, pad and method for use and for preparation of such a pad as well from the below described embodiments respectively.

The invention will now be further elucidated with reference to the drawings, in which:
Fig. 1 shows a possible embodiment of a pad according to the invention;
Fig. 1a shows a cross-section of one embodiment of a sheet used with the embodiment of Fig. 1.
Fig. 2 shows an embodiment of a system according to the invention which is provided with the pad according to Fig. 1 and a coffee-maker;
Fig. 3 shows a top plan view of a holder of the coffee-maker according to Fig. 2;
Fig. 4 shows an embodiment of the system according to Fig. 2 which is further provided with a flexible pad of filtering paper;
Figs. 5.1-5.3 show schematically a method for making a sheet used with a pad according to Fig. 1 and the method according to Figs. 5a-5f
Figs. 5a-5f show schematically a method for making the pad as discussed above;
Fig. 6a shows an elevational view of the second sheet of possible embodiments of the pad according to the invention;
Fig. 6b shows an elevational view of the second sheet of possible embodiments of the pad according to the invention;
Fig. 6c shows an elevational view of the second sheet of possible embodiments of the pad according to the invention;
Fig. 7.1 shows a side elevational view of an apparatus for determining a form-retention of a second sheet of a pad;
Fig. 7.2 shows a view according to 7.2 of Fig. 7.1;
Fig. 7.3 shows a view according to 7.3 of Fig. 7.1;
Fig. 7.4 shows a side elevational view similar to Fig. 7.1 at the moment that a knife is just beginning to touch the pad;
Fig. 7.5 shows a side elevational view similar to Fig. 7.1 when the knife has reached a lowest position; and
Fig. 7.6 shows a curve of a measured force during the test.

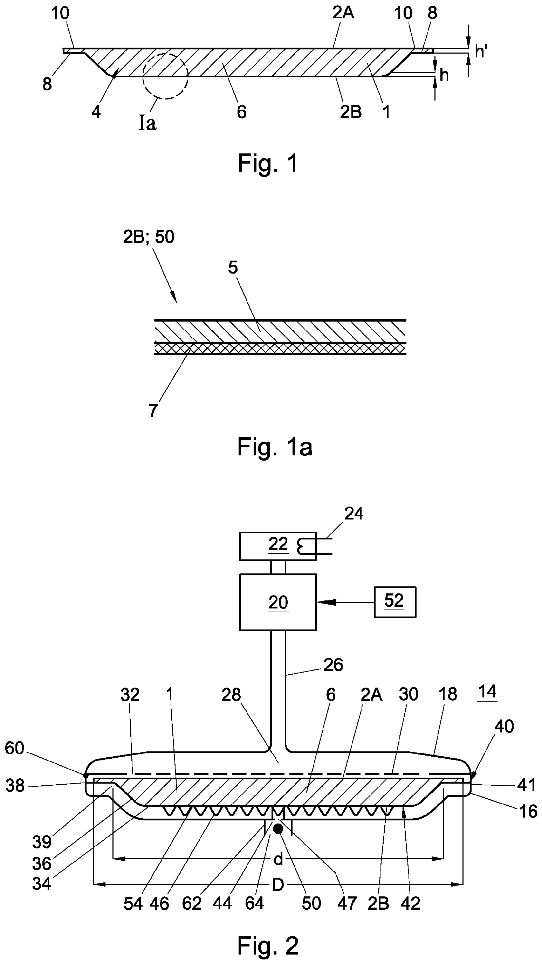

In Fig. 1, with reference numeral 1 a pad for use in a coffee-maker is shown. The pad is of a type intended for preparing one or two cups of beverage. A cup of beverage can consist, for instance, of 20-200 ml of beverage, more particularly of 20-180 ml of beverage. The pad 1 is provided with an envelope 2A, 2B with an inner space 4 which is filled with a beverage preparation product 6 which is shown in hatched representation in the drawing. In this example, it holds that the envelope bounds the inner space. The beverage preparation product is intended for preparing a beverage. To this end, the beverage preparation product comprises a product to be extracted with a fluid and/or possibly a product soluble in a fluid.

In this example, it holds that the beverage preparation product comprises exclusively a product to be extracted with a fluid, more particularly, this concerns ground coffee. The envelope is formed by a first disc-shaped sheet 2A and a second disc-shaped sheet 2B which are interconnected adjacent their longitudinal edges 8. The interconnected parts of the first sheet 2A and the second sheet 2B form a sealing seam 10. The sealing seam therefore has the shape of a ring. The first sheet and the second sheet each form a filter which can pass a fluid and which forms a barrier to the beverage preparation product. This makes it possible that, in use, with a coffee-maker a fluid such as water is supplied under pressure to the pad so that the fluid is pressed through the pad for obtaining a beverage which thereupon leaves the pad again. All this will be discussed in more detail with reference to Fig. 2.

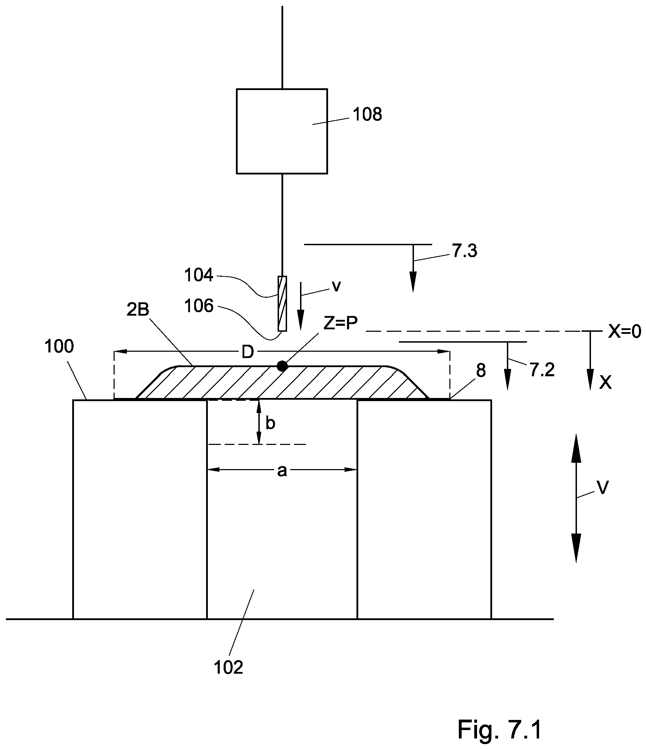

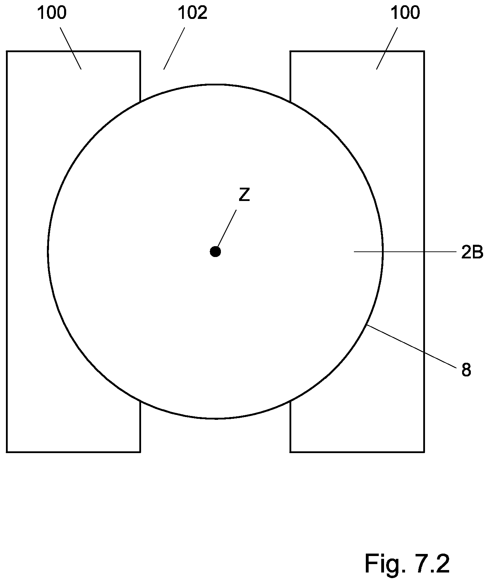

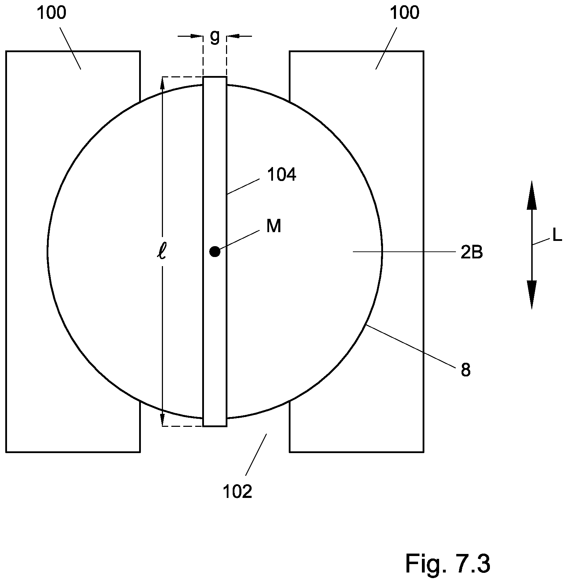

In this example, it holds furthermore that the second sheet 2B is of form-retaining design. The form retention of the second sheet, according to a test, is expressed in a force, measured during the test, which is exerted on the second sheet, while the test is carried out on the second sheet as such, that is, on the pad without the first sheet and the beverage preparation product; see Figs. 7.1-7.3.

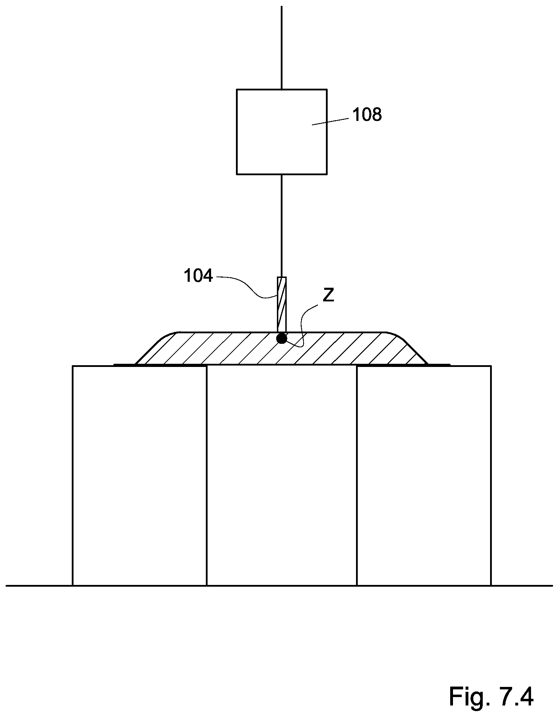

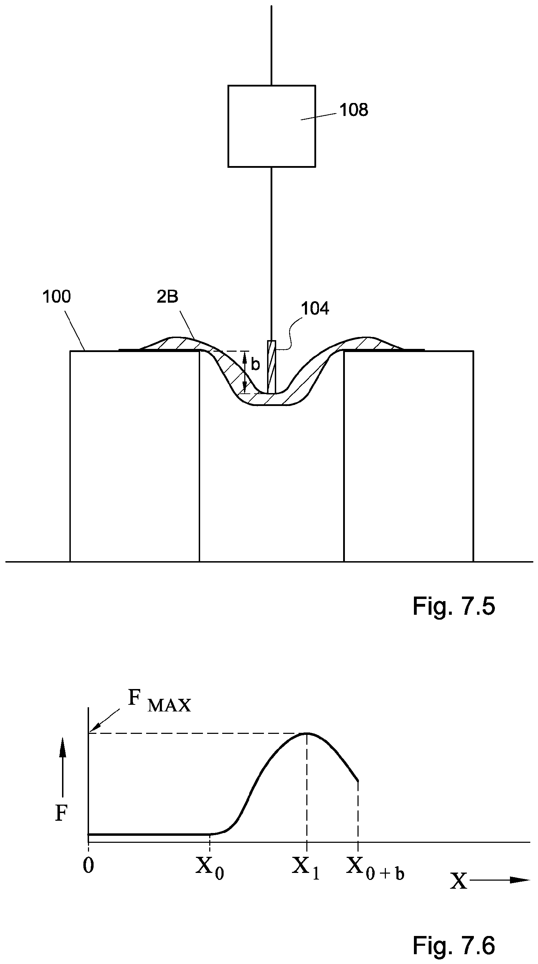

For carrying out the test, the second sheet 2B as such, that is, the pad without the first sheet and the beverage preparation product, but with preservation of its shape such as when the second sheet forms part of the pad, is laid on a horizontal surface 100, such that the second sheet is supported by its longitudinal edge 8 on the horizontal surface, while the horizontal surface is provided with an elongated groove 102 which has a width *a* of 30 mm, and while the second sheet, symmetrically with respect to the groove, overlies the groove and on opposite sides of the groove is supported on the horizontal surface. In carrying out the test use is made of a knife 104 having a length *l* which corresponds to the diameter D of the pad. A cutting face 106 of the knife has a thickness of 3 mm. A length direction L of the cutting face 106 extends in horizontal direction in a length direction L of the groove. For testing, the knife, from a position above the pad, is moved down in vertical direction V with a constant speed *υ* of 100 mm/minute, while a center M of the cutting face is situated, viewed in vertical direction, above a center of gravity Z of the second sheet. Because the second sheet has the shape of a disc with a center P, this center P corresponds to the center of gravity mentioned. Moving the knife down is carried out with a load cell 108. Prior to carrying out the test, the longitudinal edge 8 lies wholly fittingly against the surface 100. From the moment that the knife touches the second sheet (Fig. 7.4) the resistance in units Newton is measured that the knife experiences as a result of the deforming of the pad by the knife as the knife moves down. In other words, the force is measured that the knife experiences from the second sheet as the knife moves down. Before the knife touches the second sheet, this force is zero. Thereupon this force starts to run up. Moving down is continued until the cutting face of the knife is in the groove at 12 mm depth *b* with respect to the horizontal surface (see Fig. 7.5). A highest resistance or force measured with the load cell 108 is the measure of the bending stiffness of the second sheet. This highest resistance Fmax is measured in Newton. As the knife moves down and initially touches the second sheet, the second sheet will first deform elastically. Thereafter, upon further downward movement, the second sheet is deformed. The measured greatest force typically corresponds with the moment just before which the second sheet buckles and hence yields under the load of the knife. After buckling the force can decrease again.

In other words, the force is measured that the knife experiences as a result of the pad deforming. In Fig. 7.6 this force F is plotted as a function of the distance x over which the knife is moved down. From x=x0 the force F starts to rise from F=0. The maximum measured force Fmax is at x=xl. At x=x0+b the knife has reached the point of its maximum downward travel. The measured measure for the form retention of the second sheet is F max.

The measured greatest force is preferably in the range of 0.2-4 Newton, and/or is preferably greater than 1 Newton.

In particular, it holds that the second sheet also remains form-retaining when a fluid such as the beverage and/or water is caused to flow through it, while the fluid can have a temperature of at most 80 degrees Celsius. In other words, when the fluid has a temperature that can run up to 80 degrees Celsius, the second sheet keeps the form-retaining properties mentioned.

More particularly, it holds here that the second sheet remains form-retaining when a fluid is caused to flow through it, while the fluid can have a temperature of at most 90 degrees Celsius and preferably at most 99 degrees Celsius.

In this example, it holds that the second sheet is made of a thermoplastic material. A thermoplastic material is a material that becomes more plastic as the temperature rises. Accordingly, it holds in this example that the second sheet also remains form-retaining when it comes into contact with a fluid such as a beverage and/or hot water that has a temperature of 80 degrees Celsius. Because a thermoplastic material is involved here, it will also hold that the sheet remains form-retaining when it comes into contact with a fluid having a temperature that is lower than 80 degrees Celsius.

More particularly, it holds that the second sheet also remains form-retaining when it comes into contact with a fluid of 90 degrees Celsius and preferably of 99 degrees Celsius. What is involved then, as mentioned, is a second sheet that is made of a thermoplastic material.

In this example, it holds furthermore that the second sheet is made of a nonwoven material. This nonwoven material, in this example, is made of a plastic for at least 50 percent by weight and preferably for at least 60 percent by weight, while in particular the plastic consists of plastic fibers and/or plastic filaments. More preferably, it holds that the nonwoven material is made from a plastic for at least 70 percent by weight. In particular, it holds that the nonwoven material consists of the plastic for at least 80 percent by weight, and more preferably for at least 90 percent by weight. On the other hand, it holds preferably that the nonwoven material consists of a plastic for 50-100 percent by weight, more preferably for 60-100 percent by weight. Still more preferably, it holds that the nonwoven material consists of the plastic for 70-100 percent by weight, in particular consists of a plastic for 75-95 percent by weight and still more in particular consists of plastic for 80-95 percent by weight.

In this example, it holds furthermore that the plastic comprises polymers of PLA, PETP and/or LLDPE. More in general, it holds that plastics and combinations thereof are possible such as PE, PET, PETP, coPET, LLDPE, CPP, PLA and/or PP.

In this example it holds that the nonwoven material has been made form-retaining through a heat treatment. This means that the sheet-form material that has been made of the respective plastic is brought into the required shape such as it is shown for the second sheet 2B, after which the second sheet undergoes a heat treatment so that the second sheet after cooling becomes form-retaining. In this example, it holds furthermore that the second sheet is provided with cellulose fibers and/or cellulose filaments. Accordingly, in that case, the second sheet comprises a combination of the above-mentioned plastics and cellulose fibers and/or filaments. In this example, it holds furthermore that the nonwoven material is provided with the cellulose fibers and/or the cellulose filaments. If this nonwoven material, as discussed above, consists of the plastic mentioned for at least 50 percent by weight, it will hold that the nonwoven material furthermore consists of cellulose for at most 50 percent by weight. If this nonwoven material, as discussed above, consists of the above-mentioned plastic for at least 60 or at least 70 percent by weight, it will hold that the nonwoven material furthermore consists of cellulose for at most 40 or 30 percent by weight, respectively. The nonwoven material therefore comprises preferably a combination of plastic and cellulose fibers and/or filaments. The plastic, according to the invention, preferably consists of plastic fibers and/or filaments. In this example, these plastic fibers and/or plastic filaments are part of the nonwoven material. It is also possible, however, that the plastic is present in the second sheet in the form of a coating on the cellulose fibers and/or the cellulose filaments. In this example, these plastic-coated fibers and/or plastic-coated filaments are then part of the nonwoven material.

From the examples mentioned it appears that it holds in particular that the nonwoven material consists for a greater proportion of percent by weight of the plastic mentioned than of cellulose fibers and/or filaments. In this example, it holds that the density of the second sheet is in the range of 15-150 g/m2. Preferably, however, it holds that the density of the second sheet is in the range of 70-130 g/m2, more preferably in the range of 90-120 g/m2. The thickness of the second sheet in this example is in the range of 50-600 micrometer. Preferably, it holds that the thickness is in the range of 100-500 micrometer, more particularly in the range of 150-300 micrometer. The thickness mentioned is schematically denoted in Fig. 1 with the letter h.

In this example, it holds furthermore that the second sheet within the contours of the sealing seam is designed to be homogeneously permeable to a fluid such as water. Also, it holds in this example, that the second sheet within the contours of the sealing seam comprises a smoothly running inner and outer surface.

In this example, it holds furthermore that the first sheet is of flexible design. In particular, it holds that the first sheet is made of filtering paper known per se. Here, it holds in this example that the first sheet is provided with at least 70 percent of cellulose fibers and/or cellulose filaments. The residual portion of the first sheet may again be made of the plastics and/or plastic fibers and/or plastic filaments and/or plastic coatings mentioned in the context of the second sheet. More particularly, it holds that the first sheet is provided with at least 80 percent by weight of cellulose, more preferably with at least 90 percent by weight of cellulose. The first sheet comprises less than 30 percent by weight of plastic polymers, preferably of a same kind as mentioned in the context of the second sheet.

The thickness of the first sheet is, for example, 1.4-10 times smaller than the thickness of the second sheet. The thickness mentioned is schematically denoted in Fig. 1 with the letter h'.

As can be seen in Fig. 1, it holds that the part of the second sheet that is within the contours of the sealing seam is of dish-shaped design. Also, it holds in this example that the first sheet is of flat design. The part of the second sheet that is within the contours of the sealing seam, as shown in Fig. 2, has a diameter denoted with d. The diameter of the whole pad is denoted with D in Fig. 2. Also, this means that the ring-shaped sealing seam 10 has a diameter of (D-d)/2. In this example, D is approximately 74.4 mm and d is approximately 61 mm. Other dimensions are conceivable for D. D can be, for instance, in the range of 45-90 mm, preferably 70-80 mm, more preferably 73-76 mm, in particular approximately 74.4 mm.

According to an alternative, the second sheet can comprise a foil and/or consist of a foil which is provided with a multiplicity of outflow openings and is made of a plastic, comprising plastic polymers. The plastic polymers can comprise PE, PET, PETP, coPET, LLDPE, CPP, PLA and/or PP. The second sheet can then comprise a first layer which consists at least substantially of PETP and a second layer which consists at least substantially of CPP.

With regard to enforcement or further enforcement of the sheets 2A, 2B or any other sheet provided for constituting an envelope and defining an inner space 4 for a beverage preparation product 6 of a pad, an enforcement layer 7 can be applied on the respective sheets ground material 5 so that the sheets are of (further) form-retaining design, having at least one sheet portion comprising the coated enforcement layer made of a binder material in such a way that it provides at least locally a reinforced area. With the embodiment of Fig. 1 the enforcement layer 7 is applied on the ground material 5 of the second sheet 2B (see Fig. la). As mentioned it is also possible to provide it on the first sheet 2A. It can be applied on any side of the respective sheets, also on both sides.

With the embodiment of Fig. 1, the enforcement layer 7 is arranged on the outside of the pad 1 and the second sheet 2B, providing, even when a flexible sheet material 5 for the sheet 5B is provided, form-retaining ability of the sheet 2B and as a result of the pad 1.

Preferably it holds that the enforcement layer 7 is applied to the ground material 5 and the sheet portion respectively before interconnecting the sheets 2A, 2B, preferably before assembling of the pad 1 and more preferably after manufacturing of the sheet (as described with Figs. 5.1-5.3).

According to the invention the enforcement layer 7 is applied to the sheet portion by spraying or by using a similar solution discharging method and/or it is printed and especially ink-jetted to the sheet portion. Especially in this regard it preferably holds that the binder material is applied as a fluid based and especially water-based coating.

Preferably it holds that the enforcement layer 7 is applied as a solution comprising the binder material and especially chemical binders. Preferably it is applied as a solution comprising film forming polymers and in such a way that the binder material is crosslinking fibers or similar material components of the sheet portion material.

With regard to the use of the pad for preparation of a beverage preferably the enforcement layer comprises a food-grade binder material. This binder material preferably comprises dye and/or colouring pigments.

The binder material can contain binders of different type, like milk proteins, lipids, chitosan and/or blends of chitosan, binders known on the market under the following brands: Freshseel⁽™⁾, Fry Shiled⁽™⁾, Natrue Seal⁽™⁾, Nutrasave⁽™⁾, Opta Glaze⁽™⁾, Seal gum⁽™⁾, Spray gum⁽™⁾, Semperfresh⁽™⁾, Z Coat⁽™⁾, polyvinyl alcohol (PVOH). Further it can be also chosen from the group comprising sucrose esters, calcium pectinate, calcium ascorbate, N,O-carboymethyl chitosan, wheat gluten, calcium acetate, corn protein, polymers of resin, sugar, cocoa solids, whitener, whey protein, starch, propylene glycol alginate, guar gum, hydroxyl propylmethyl cellulose (HPMC), Hydroxyl ethyl cellulose, polyethylene glycol, pullulan, carbohydrates, galactomannane.

With regard to the application it preferably it holds that the enforcement layer 7 extends at least partly over the filter formed by the first sheet 2A and/or the second sheet 2B. In general the enforcement layer 7 preferably covers the whole first sheet and/or the second sheet. It is also possible that the enforcement layer extends at least partly in a line and especially a mesh structure or a similar pattern structure over the envelope. Preferably it holds that the enforcement layer is arranged in bands or similar lines extending in radial direction of the pad and/or a circumferential direction, especially closed upon itself, extending around an axial axis of the pad, for instance in the sealing seam or with regard to the central axis inside of the sealing seam having a smaller diameter than the sealing seam. It is also possible to provide the enforcement layer as a design, brand, or similar graphic element also having enforcing abilities.

As also explained further below it preferably holds that the first and/or the second sheet is shaped such that it is provided with at least one groove or a multiplicity of grooves to increase the form retention of the second sheet, the grooves for instance extending in radial direction of the pad and/or the at least one groove constituting a circumferential groove closed upon itself, extending around an axial axis of the pad, for instance in the sealing seam or within the sheet outside the sealing seam so that the groove has a smaller diameter than the sealing seam. Especially here it then preferably holds that the enforcement layer is at least partly arranged along and especially in and/or on the grooves.

In Fig. 2 a system is shown in which the pad of Fig. 1 is used. The system is provided with a coffee-maker 14 which is provided with a holder 16 for receiving the pad 1. Further, the coffee-maker is provided with a cover 18 for closing off the holder 16. The coffee-maker is furthermore provided with fluid means 20, 22 for generating a fluid flow under pressure. In this example, these fluid means consist of a pump 20 and a storage vessel 22 which is filled with a fluid, in this example with hot water. The temperature of the water can be, for example, 70-98 degrees Celsius. To that end, the storage vessel 22 is provided with a heating element 24. The storage vessel 22 itself in turn may be filled from a larger storage vessel, which comprises cold water. This larger storage vessel is not shown in the drawing. The pump 20, in use, supplies hot water via a duct 26 to an inner space 28 of the cover 18. A bottom 30 of the cover is provided with a multiplicity of inflow openings 32. The holder 16 is provided with a bowl-shaped inner space 36 which is bounded by a bottom 34 of the holder and an upstanding sidewall 38 of the holder. The bottom consists of an outer horizontally directed ring-shaped bottom part 40 which adjoins the sidewall 38. Furthermore, the bottom comprises an inner dish-shaped bottom part 42, while the dish-shaped bottom part adjacent the ring-shaped bottom part slopes downwards in a direction directed away from the sidewall, to the inside of the holder. The ring-shaped bottom part is provided with an outer edge 41 which adjoins the sidewall 38 and an inner edge 43 which adjoins the dish-shaped bottom part 42. The bottom is provided with at least one outflow opening 44. This outflow opening in this example is located in the dish-shaped bottom part 42. As shown in Fig. 2, it holds that the pad 1 rests on the bottom 34, with the second sheet extending along the bottom to near the upstanding sidewall 38. The sealing seam 10 of the pad then rests on the ring-shaped bottom part 40. As can be seen, the second sheet has a shape that corresponds to the shape of the bottom of the holder. The second sheet here has a smoothly running inner and outer surface within the sealing seam. In this example, it holds furthermore that in the dish-shaped bottom part 42 grooves 46 are provided. The grooves extend exclusively under the beverage preparation product 6 in the pad. In this example, it holds that the grooves 46 are formed by a multiplicity of projections 54 of the bottom. Between the upstanding projections 54, the respective grooves are formed. According to the invention, the grooves may also be differently formed, for instance as slots provided in the bottom and extending, for instance, in radial direction towards the outflow opening 44. The bottom is at least partly of smooth design and is made of a plastic and/or metal. The upper side of the tops are smooth, just like the rest of the bottom. In this example, it holds that the beverage preparation product is ground coffee. As can be properly seen, the ground coffee 6 forms a coffee bed. The grooves are under the coffee bed but also within the contours of the coffee bed, i.e., within the contours of the positions where the beverage preparation product is situated in the pad. The dish-shaped bottom part comprises an inner flat bottom part which is denoted with d' in Fig. 2. As can be seen, the grooves extend exclusively in this inner bottom part d' which is flat. Further, it holds that the at least one outflow opening 44 is provided with a nozzle 46 for generating a jet of the beverage as will be further elucidated hereinafter. To this end, the system is further provided with an impact member 50 which, in use, is impacted by a jet of the beverage made. The working of the system described up to this point is as follows.

A user will first of all remove the cover 18 for placing the pad 1 of Fig. 1 in the holder 16 of Fig. 2. Because the pad is provided with the second sheet 2B which is form-retaining, the pad will of itself slide into the right position as the pad is positioned in the bottom. The pad is, as it were, self-locating and ends up in the position as shown in Fig. 2. After this, the holder can be closed off with the cover as shown in Fig. 2. Thereupon a user operates the control unit 52 of the coffee-maker 14. The result is that the control unit 52 activates the pump 20. As a result, hot water is supplied from the storage vessel 22 via the duct 26 to the inner space 28 of the cover 18. This water will leave the cover 18 and flow into the holder via the inflow openings 32. The consequence is that the water is supplied under pressure from the upper side of the pad to the first sheet of the pad. The pressure in this example is 1.1 bar above atmospheric pressure. The hot water will then penetrate via the first sheet 2A into the inner space of the pad. Here, the hot water comes into contact with the ground coffee so that the coffee beverage is formed. The coffee beverage leaves the coffee pad via the second sheet 2B. As a result of the second sheet 2B becoming moist, it will form a sealing with the bottom 34, there where there are no grooves. There where the grooves are, the beverage will leave the pad. As a result of the grooves extending exclusively under the coffee bed, bypass is avoided. What is further avoided is that the hot water forms channels extending in vertical direction through the coffee bed. Such channels would preclude an optimal and efficient extraction of the ground coffee. Since, in addition, the grooves extend in a flat part of the bottom, this enables the second sheet to properly abut the bottom, so that it's the grooves that determine where the beverage can flow out of the pad. The beverage proceeds to flow via the grooves to the outflow opening 44. Because the outflow opening 44 is provided with a nozzle 47, while moreover it holds that the fluid is supplied to the pad under pressure, the coffee beverage will be formed into a jet that impacts the impact surface 50. As a result, the beverage will be atomized in a chamber 62 of the holder which is open at its underside 64. When the beverage is thereupon received in a cup, a beverage is obtained with a fine-bubble foam layer. After preparation of the beverage, the holder can be opened again by removing the cover. The pad 1 can then be removed easily in that the second sheet is still form-retaining.

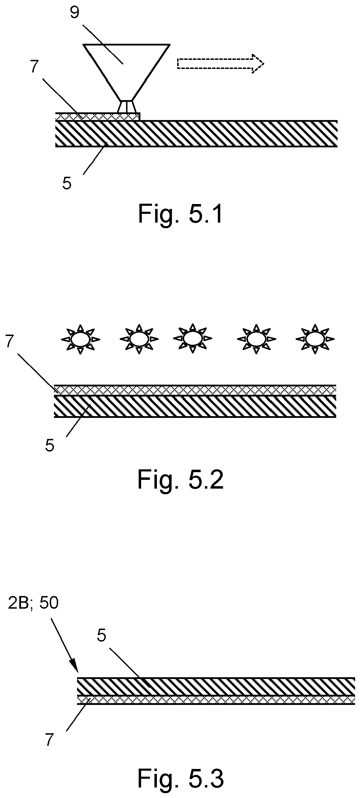

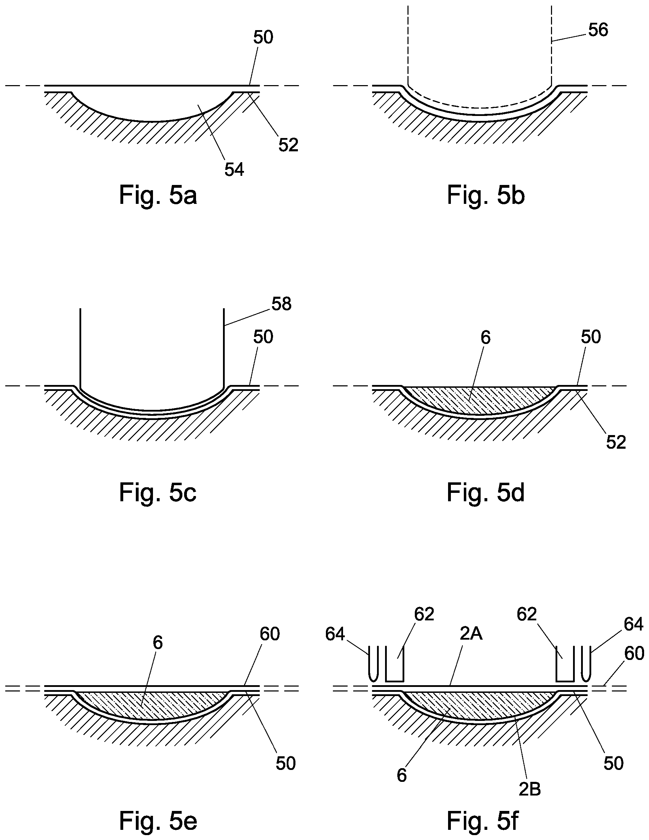

In this example, it holds that the cover is provided with a sealing ring 60 which seals fluid-tightly against the upstanding sidewall 38 of the holder. It is also possible, however, that the upstanding sidewall 38 is provided with the sealing ring, this sealing ring then sealing against the cover 18. In this example, the second sheet is of form-retaining design. It is also possible, however, that the first sheet is also of form-retaining design. Preferably, it holds here that the first sheet is made of a same material as the second sheet. More particularly, it holds here that the first sheet and the second sheet are made from a same sheet or same sheets. In this example, the beverage preparation product consists of ground coffee. It is also conceivable, however, that the beverage preparation product consists of, for example, tea. (Furthermore, it is possible that the beverage preparation product consists of a product soluble in fluid or a product that forms a dispersion such as milk powder and/or cacao for preparing milk or chocolate milk.) It is also conceivable that the beverage preparation product is provided with one of the extractable products mentioned or a different type of extractable product in combination with a fluid-soluble product. The fluid-soluble product in turn may consist of milk powder or a flavor enhancer. Also, it is conceivable that the pad is used in a different type of coffee-maker. Further, in the holder of the coffee-maker of Fig. 2, also a coffee pad 1' according to Fig. 5 may be placed, which is provided with an inner space which is filled with ground coffee, while the inner space is formed by a top sheet 2A' and a bottom sheet 2B' which are interconnected adjacent their longitudinal edges, while the top sheet and the bottom sheet also form an outer side of the pad and are each made from flexible filtering paper. The coffee pad 1' and the holder 16 are tailored to each other so that the coffee pad can be received in the holder for preparing coffee, such that, in use, the fluid is supplied under pressure to the upper side of the pad and is pressed through the pad so that the fluid flows through the top sheet whereby in the pad a coffee extract is formed which proceeds to leave the pad via the bottom sheet and wherein the coffee extract proceeds to flow out of the holder via the beverage outflow opening of the holder. The bottom sheet of the pad here extends over the bottom 34 of the holder up to the upstanding sidewall 38 of the holder, thereby also forming a sealing with the holder to prevent bypass. The beverage can leave the pad there where the grooves are. Accordingly, the invention also concerns a system provided with the coffee-maker, the pad 1 and the pad 1', allowing a user, as desired, to use the pad 1 or the pad 1' for preparing the beverage.

Figs. 5a-5f schematically show a method for making the pad as discussed above, wherein Figs. 5.1-5.3 show a method for making a sheet e.g. used with a pad according to Fig. 1 and the method according to Figs. 5a-5f.

As shown in Fig. 5.1, a ground material of a sheet, comprising material as mentioned herein, e.g. a flexible raw sheet 5, is provided. By use of an application apparatus 9, e.g. a spraying means, a printer and especially an inkjet-printer, an enforcement layer 7 comprising a binder material is applied to at least one sheet portion of the raw sheet 5 in such a way that it provides at least locally reinforced areas. The binder material can be of the kind mentioned above.

As shown in Fig. 5.2, the applied enforcement layer is dried by use of drying means, e.g. infrared-applications means, hot-air application means, heating means or similar drying means. It is also possible to dry the applied enforcement layer and binder material respectively without these means, e.g. by air-drying.

As shown in Fig. 5.3 after the drying step, a form-retaining sheet material, referred to as a fourth sheet 50 in the following, is provided, having at least one sheet portion comprising the coated enforcement layer 7 of a binder material in such a way that it provides at least locally a reinforced area.

As shown with Fig. 1a and further explained for the method according to Figs 5a-5f, the produced sheet 2B; 50 is further processed to a pad 1, wherein the sheet 2B; 50 is arranged in such a way that the enforcement layer 7 is arranged on the outside of the pad 1. It is also possible to arrange the sheet(s) in such a way that the enforcement layer is situated on the inside, i.e. within the inner space 4, being in contact with the beverage preparation product 6. It is also possible to provide the enforcement layer 7 on both sides of the sheet.

In Fig. 5a it is shown that the fourth sheet 50 obtained e.g. by the method explained before is placed above a mold 52 made of metal. Through, for instance, vacuum suction of the mold cavity 54, the fourth sheet takes the shape of the mold cavity (Fig. 5b). Also, alternatively, the fourth sheet may be mechanically pressed into the mold cavity with a stamp 56 (represented in broken lines). Then, in Fig. 5c, for further enforcing optionally the following steps can be performed: The fourth sheet is heated with a stamp 58. The fourth sheet is heated to, for example, 200-400 degrees Celsius. (The fourth sheet may also be heated in step c. to a temperature of 90-200 degrees Celsius, in particular when the second sheet is made of PLA.) The plastics in the sheet will thereby liquefy and/or soften. After this, the stamp 58 is removed and the fourth sheet is cooled. The sheet has now become form-retaining. It is also possible to simply form the sheet 50 without this "further enforcement step", as, due to the applied enforcement layer the fourth sheet already comprises form retaining abilities. Further it is possible to provide the sheet in this example with a smoothly running inner and outer surface within the sealing seam by applying a respectively arranged enforcement layer and/or by the above heating step.

Thereupon, the beverage preparation product 6 is positioned on the fourth sheet (Fig. 5d). Next, a third sheet 60 is placed above the fourth sheet 50 and the beverage preparation product. By means of a ring-shaped heating element 62, the fourth sheet and the third sheet are welded together (Fig. 5f), whereby the sealing seam 10 is formed. Next, with a ring-shaped die 64 the pad 1 is cut out. Alternatively pre-cut sheets can be provided. The cut-out part of the fourth sheet 50 then constitutes the second disc-shaped sheet 2B and the cut-out part of the third sheet 60 then constitutes the first disc-shaped sheet 2A. Accordingly, it holds that in a step a. a set-up of a third sheet, fourth sheet and the beverage preparation product is made, with the beverage preparation product situated between the third sheet and the fourth sheet (Fig. 5e), and then in a step b. the third sheet and the fourth sheet are joined together (Fig. 5f). Further, it holds that the fourth sheet is optionally heated in a step c. (Fig. 5c) and then is optionally cooled in a step d. for further increasing the bending stiffness of the fourth sheet.

Further, it optionally holds that the fourth sheet is heated in step c. to a temperature of 200-400 degrees Celsius or for instance 90-200 degrees Celsius. In a step e. the fourth sheet is placed in a mold so that the fourth sheet obtains a predetermined shape (Fig. 5b), while thereupon step c. (Fig. 5c) is carried out. In a step f. the beverage preparation product is placed on the fourth sheet, preferably while the fourth sheet is already in the mold (Fig. 5d), whereby step b. is carried out after step f. It also holds in this example that step c. (Fig. 5c) is carried out before step f. (Fig. 5d). The third sheet and/or the fourth sheet may during the execution of step b. be heated to 90-400 degrees Celsius, in particular 90-200 degrees Celsius. Also, it holds that the fourth sheet and possibly the third sheet are cooled after carrying out step b.

It is also possible, however, that step b. and step c. are carried out at the same time. This can be done by leaving out the step of Fig. 5c while in Fig. 5f the mold is heated for carrying out step c.

Such variants are each understood to be within the purview of the invention. Thus, it is also possible to make the fourth sheet more form-retaining by calendering it in a step g. before the step according to Fig. 5a is carried out. After this, the method can be continued as has been discussed with reference to Figs. 5a-5f. This means that calendering in step g. is carried out before step a. and step b. It is also possible that only the steps of Figs. 5a, 5b, 5d, 5e, and 5f are carried out. Accordingly, the step c. of heating and the step d. of cooling are then omitted.

Also, still other embodiments of the pad are conceivable.

The invention is by no means limited to the embodiments outlined. Thus, the second sheet can also comprise a foil and/or consist of a foil which is provided with a multiplicity of outflow openings and is made of a plastic. The outflow openings can for instance be circular and have a diameter of 0.15-0.6 mm. The plastic may be of a kind as discussed above. Also, it is conceivable that the second sheet comprises a first layer which consists at least substantially of PETP and a second layer which consists at least substantially of CPP. By heating the foil of the above-outlined kinds and bringing it in a desired shape and/or by appropriately choosing the thickness of the foil, the form retention of the second sheet can be adjusted to the desired level. Production of the pad can then take place as has been discussed with reference to Fig. 5. Also, the second sheet may be composed from such a foil and a layer of nonwoven material, such as, for example, filtering paper. This layer of nonwoven material can also consist of the nonwoven material which has been discussed above for the second sheet of the pad according to Fig. 1. This layer may be bonded to the foil by, for instance, heating. In addition, it holds for each of the above-outlined embodiments that the beverage preparation product may be tamped down and/or condensed, and thereby contributes to the form retention of the pad. Such tamping down and/or compaction may be carried out, for instance, in the situation of Fig. 5d, after which the pad is closed with the first sheet as discussed for Figs. 5e and 5f. In each embodiment the beverage preparation product may be provided with ground coffee.

In addition, the second sheet may also be designed of different materials. Thus the second sheet may be made of a polyester fiber, in particular of Smash™ material. Preferably, it holds that the second sheet is made of SMASH™ 150 g/m2. Preferably, it holds here that the thickness of the second sheet is 250-450 µm, preferably 300-400 µm, more preferably 350 µm.

Also, it is possible that the second sheet is made of Polylactic Acid (PLA) fibers. Such PLA fibers are for instance described in WO 2012/027539. Preferably, it holds that the second sheet is made of PLA 60-120 g/m2, more preferably PLA 90 or 100 g/m2. In particular, furthermore, it may hold that the thickness of the sheet made of PLA is 100-600 µm (micrometer).

In particular, it holds furthermore that the second sheet is made of 100% Polylactic Acid (PLA) fibers and derivatives so that the second sheet is completely biodegradable after use. It preferably holds here that the second sheet is made of PLA fibers having a melting point of 145-175 degrees Celsius and PLA fibers having a melting point of 105-165 degrees Celsius. A combination of these two types of fibers provides on the one hand form retention of the second sheet and on the other coherence between the fibers.

According to an alternative, however, it holds that the second sheet consists for x% of Polylactic Acid (PLA) fibers and for (1-x)% of paper, with x being in the range of 50-80, preferably in the range of 60-70, more preferably approximately equal to 65. In particular it holds here that the PLA fibers have a melting point of 105-165 degrees Celsius.

In each of the cases outlined above, the fibers can have a length of 2-90 mm. Also, the fibers may be 0.6-6.0 denier. In particular, it holds that the first sheet is of more transparent design than the second sheet. The first sheet can then have the properties of the top sheet as discussed in EP 2 424 794. Also, it may hold that the second sheet is of at least substantially opaque design.

In each of the embodiments outlined, the second sheet may have a smoothly running inner and outer surface within the sealing seam.

In each of the above-outlined embodiments the first and/or the second sheet may also be so configured as to be provided with at least one groove or a multiplicity of grooves to increase form retention of the sheet, with the grooves 80 extending, for instance, in radial direction of the pad and/or with the at least one groove 90 constituting a circumferential groove closed upon itself, extending around an axial axis of the pad, for example in the sealing seam (groove 90.1) or in the second sheet inside an area enclosed by the sealing seam so that the groove (90.2) has a smaller diameter than the sealing seam.

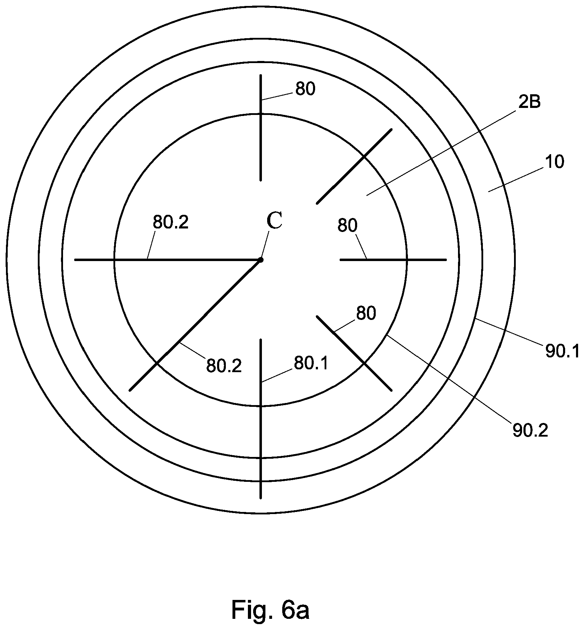

This is shown in Fig. 6a in which a view of the second sheet is shown. The radial grooves 80 preferably extend to near the sealing seam 10. It is also conceivable, however, that the radial grooves extend into the sealing seam 10 (indicated for one groove 80.1). Further the grooves can be arranged extending to a center C of the sheet and preferably intersecting each other. It is also possible to provide the grooves on a bowl-shaped sheet, like the second sheet 2B in an arrangement similar to a cup of a cup-cake, wherein grooves are extending primarily at inclined side walls preferably extending into the sealing seam. Preferably a bottom portion of the bowl-like formed sheet does not comprise grooves. This bottom portion is preferably basically flat. The grooves can be provided as alternating inward and outward grooves, oscillating with regard to the plane of the sheet in alternating directions, especially when seen in an annular cross section along a wall portion extending to the sealing seam.

The grooves in this example have a V-shaped cross section. Other shapes, such as a U-shaped cross section, are also possible. By providing the mold 52 with such grooves and providing the stamp 56 with ribs corresponding to these grooves, the fourth sheet and hence the second sheet can be provided with the respective grooves 80, 90 by carrying out with such a mold and stamp, as desired, one of the methods which have been discussed with reference to Fig. 5.

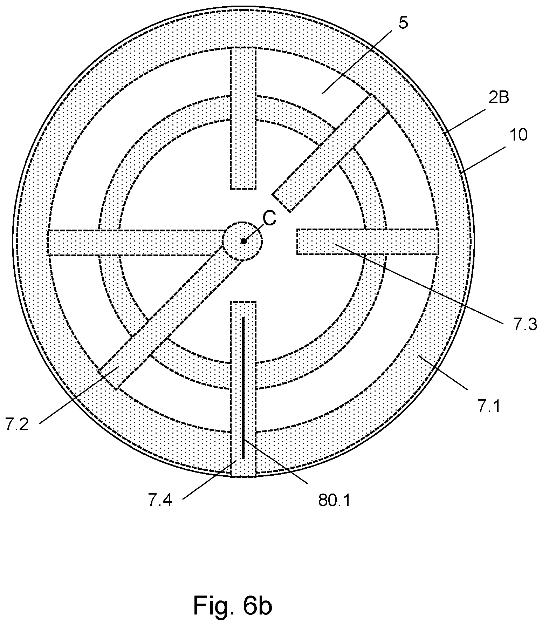

As shown with Fig. 6b the sheet 2B comprises multiple sheet portions where enforcement layer 7 is applied. With this embodiment shown, the enforcement layer is arranged similar to the orientation of the grooves as already explained above in Fig. 6a. Preferably the enforcement layer 7 is applied in bands 7 extending, for instance, in radial direction of the pad (enforcement layer and band 7.2, 7.3 respectively) and/or with at least one band 7.1 constituting a circumferential band closed upon itself, extending around an axial axis of the pad, for example in or in the area of the sealing seam or on the second sheet inside an area enclosed by the sealing seam so that the band has a smaller diameter than the sealing seam 10. It has to be mentioned that the embodiment of Fig. 6b could also be provided without any grooves or with an amended arrangement of grooves, as they are shown in Fig. 6a. if grooves or at least one groove is provided that enforcement layer is preferably arranged in, on or adjacent to the grooves as shone with band 7.4 and groove 80.1.

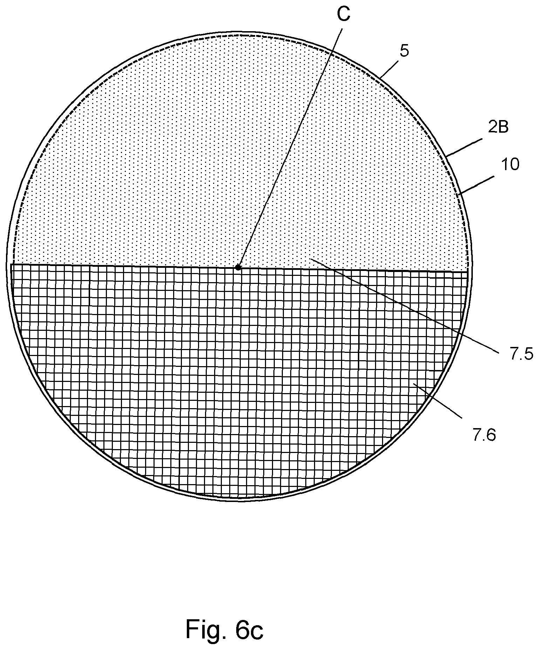

As shown with Fig. 6c the enforcement layer can also be provided covering basically the whole sheet, wherein it can be e.g. homogeneously applied (7.5) or according to a mash or similar structure (7.6). It is possible to provide multiple portions comprising different application styles.

In the foregoing specification, the invention has been described with reference to a specific embodiment of the invention. It will, however, be evident that various modifications and changes may be made therein without departing from the scope of the invention as set forth in the appended claims.

## Claims

1. A form-retaining pad (1) for use in a coffee-maker for preparing 1 or 2 cups of beverage, provided with an envelope (2A, 2B) with an inner space (4) which is filled with a beverage preparation product (6) for preparing the beverage, wherein the beverage preparation product (6) comprises a product to be extracted with a fluid and/or a product soluble in a fluid, wherein the envelope (2A, 2B) is formed by a first disc-shaped sheet (2A) and a second disc-shaped sheet (2B) which are interconnected adjacent their longitudinal edges (8), wherein the interconnected parts of the first sheet (2A) and the second sheet (2B) form a sealing seam (10) and wherein the first sheet (2A) and the second sheet (2B) each form a filter which can pass a fluid and which forms a barrier to the beverage preparation product (6), wherein, in use, with the coffee-maker a fluid such as water is supplied, under pressure, to the pad (1) so that the fluid is pressed through the pad (1) for obtaining the beverage which thereupon leaves the pad (1), **characterized in that** at least one of the first sheet (2A) and the second sheet (2B) is having at least one sheet portion comprising a coated enforcement layer (7) of a binder material in such a way that it provides at least locally a reinforced area for providing a form-retaining design to the respective sheet, wherein the enforcement layer (7) is applied to the sheet portion by spraying or a similar solution discharging method and/or is printed and especially ink-jetted to the sheet portion.

2. A pad (1) according to claim 1, **characterized in that** the enforcement layer (7) is applied in such a way that it provides at least locally reinforced areas on the envelope (2A, 2B) with regard to the rigidity of the envelope (2A, 2B).

3. A pad (1) according to any one of the preceding claims, **characterized in that** the enforcement layer (7) is applied as a solution comprising the binder material and especially chemical binders and/or as a solution comprising film forming polymers and/or in such a way that the binder material is crosslinking fibers or similar material components of the sheet portion material.

4. A pad (1) according to any one of the preceding claims, **characterized in that** the enforcement layer (7) comprises a food-grade binder material and/or binder material with dye and/or colouring pigments.

5. A pad (1) according to any one of the preceding claims, **characterized in that** the enforcement layer (7) is homogeneously applied to the sheet portion and/or is applied as a water-based coating.

6. A pad (1) according to any one of the preceding claims, **characterized in that** the binder material comprises milk proteins and/or lipids and/or chitosan and/or blends of chitosan and/or polyvinyl alcohol (PVOH) and/or binders chosen from the group comprising sucrose esters, calcium pectinate, calcium ascorbate, N,O-carboymethyl chitosan, wheat gluten, calcium acetate, corn protein, polymers of resin, sugar, cocoa solids, whitener, whey protein, starch, propylene glycol alginate, guar gum, hydroxyl propylmethyl cellulose (HPMC), Hydroxyl ethyl cellulose, polyethylene glycol, pullulan, carbohydrates, galactomannane.

7. A pad (1) according to any one of the preceding claims, **characterized in that** the enforcement layer (7) extends at least partly over the filter formed by the first sheet (2A) and/or the second sheet, and especially at least partly in a line structure over the envelope (2A, 2B) and/or at least partly in a mesh structure over the envelope (2A, 2B) and/or at least partly in a pattern structure over the envelope (2A, 2B) and/or is provided as a design, brand, or similar graphic element.

8. A pad (1) according to any one of the preceding claims, **characterized in that** the enforcement layer (7) is arranged in such a way that it comprises inlet openings for the fluid to enter the inner space (4) of the pad (1) and/or such that it comprises outlet openings for the fluid to leave the inner space (4) of the pad (1).

9. A pad (1) according to any one of the preceding claims, **characterized in that** the sheet portions comprising the binder material are arranged at areas of the envelope (2A, 2B) where no fluid permeability is required, preferably at the sealing seam area and/or at vertical wall areas of the envelope (2A, 2B).

10. A pad (1) according to any one of the preceding claims, **characterized in that** the enforcement layer (7) is arranged in bands (7) or similar lines extending in radial direction of the pad (1) and/or a circumferential direction, especially closed upon itself, extending around an axial axis of the pad (1), for instance in the sealing seam (10) or the sheet inside an area enclosed by the sealing seam (10) so that the band has a smaller diameter than the sealing seam (10).

11. A pad (1) according to any one of the preceding claims, **characterized in that** the first and/or the second sheet (2B) is shaped such that it is provided with at least one groove (80, 90) or a multiplicity of grooves to increase the form retention of the second sheet, the grooves for instance extending in radial direction of the pad (1) and/or the at least one groove constituting a circumferential groove closed upon itself, extending around an axial axis of the pad (1), for instance in the sealing seam (10) or on the sheet inside an area enclosed by the sealing seam (10) so that the groove has a smaller diameter than the sealing seam (10), and wherein the enforcement layer (7) is at least partly arranged along and especially in and/or on the grooves.

12. A pad (1) according to any one of the preceding claims, **characterized in that** the at least one sheet consists of a plastic for at least 50 percent by weight; and preferably consists of a plastic for at least 60 percent by weight, while in particular the plastic consists of plastic fibers and/or plastic filaments; preferably consists of a plastic for at least 70 percent by weight, preferably for at least 80 percent by weight and more preferably for at least 90 percent by weight, while in particular the plastic consists of plastic fibers and/or plastic filaments.

13. A pad (1) according to any one of the preceding claims, **characterized in that** the at least one sheet is made of a porous and/or nonwoven material.

14. A pad (1) according to any one of the claims 12 or 13, **characterized in that** the nonwoven material is made of the plastic and/or that the plastic is present in at least a part of the nonwoven material in the form of fibers and/or filaments which, at least for a part, are made of the plastic, more particularly in the form of plastic fibers and/or plastic filaments, still more particularly in the form of cellulose fibers and/or cellulose filaments which are provided with a plastic coating.

15. A pad (1) according to any one of the preceding claims 12 - 14, **characterized in that** the at least one sheet is built up from a plurality of layers of material which are bonded together, more particularly that the at least one sheet comprises a first layer which consists at least substantially of cellulose fibers and/or cellulose filaments and a second layer which is made partly of the plastic and partly from cellulose fibers and/or cellulose filaments.

16. A pad (1) according to any one of the preceding claims 12 - 15, **characterized in that** the plastic consists of plastic polymers or comprises plastic polymers, wherein the plastic polymers comprise PE, PET, PETP, coPET, LLDPE, CPP, PLA and/or PP.

17. A pad (1) according to any one of the preceding claims, **characterized in that** the at least one sheet comprises a first layer at least substantially consisting of PETP and a second layer at least substantially consisting of CPP.

18. A pad (1) according to any one of the preceding claims, **characterized in that** the at least one sheet is made of a polyester fiber, and/or of Polylactic Acid (PLA) fibers and/or of a biodegradable material being at least substantially completely biodegradable after use and/or of PLA fibers have a melting point of 145-175 degrees Celsius and PLA fibers have a melting point of 105-165 degrees Celsius and/or of filtering paper and/or is preferably provided with cellulose fibers and/or that the first sheet (2A) is provided with at least 70% by weight of cellulose, more preferably with at least 80% by weight of cellulose, still more preferably with at least 90% by weight of cellulose, while possibly the first sheet (2A) for the rest is made of a plastic, and/or that the first sheet (2A) comprises less than 30% of plastic polymers.

19. A system provided with a pad (1) according to any one of the preceding claims and a coffee-maker, wherein the coffee-maker is provided with a holder (16) for receiving the pad (1), a cover (18) for closing off the holder (16), and fluid means for generating a fluid flow under pressure, wherein the holder (16) is provided with at least one beverage outflow opening and the cover (18) is provided with at least one fluid inflow opening which are in fluid communication with the fluid means for supplying the fluid flow to the fluid openings so that the fluid is supplied under pressure to the first sheet (2A) of the pad (1) so that the fluid is pressed through the pad (1) for the preparation of the beverage in the pad (1), the beverage leaving the pad (1) via the second sheet to proceed to leave the holder (16) via the at least one beverage outflow opening.

20. Use of a pad (1) according to any one of the preceding claims 1-18, wherein the pad (1) is placed in a holder (16) which is provided with at least one beverage outflow opening, the holder (16) with the pad (1) therein is closed off with a cover (18) which is provided with at least one fluid inflow opening, and a fluid is supplied under pressure to the at least one fluid inflow opening so that the fluid is supplied via the first sheet (2A) to the beverage preparation product (6) in the pad (1) for preparing the beverage and wherein the beverage leaves the pad (1) via the second sheet, wherein the beverage proceeds to leave the holder (16) via the at least one beverage outflow opening.

21. A method for preparing a beverage with a pad (1) according to any one of the preceding claims 1-18, wherein the pad (1) is placed in a holder (16) which is provided with at least one beverage outflow opening, the holder (16) with the pad (1) therein is closed off with a cover (18) which is provided with at least one fluid inflow opening, and a fluid is supplied under pressure to the at least one fluid opening so that the fluid is supplied via the first sheet (2A) to the beverage preparation product (6) in the pad (1) for preparing the beverage and wherein the beverage leaves the pad (1) via the second sheet (2B), wherein the beverage proceeds to leave the holder (16) via the at least one beverage outflow opening.

22. A method for making a pad (1) according to any one of the preceding claims 1-18, wherein
in step a. a set-up of a third sheet (60), fourth sheet (50) and the beverage preparation product (6) is made, with the beverage preparation product (6) situated between the third sheet (60) and the fourth sheet (50), and then in step b. the third sheet (60) and the fourth sheet (50) are joined together, thereby forming the sealing seam (10) so that the beverage preparation product (6) is included in the inner space (4), **characterized in that** in a step h. an enforcement layer (7) comprising a binder material is applied to a sheet portion of the first sheet (2A) and/or the second sheet in such a way that it provides at least locally reinforced areas on the envelope (2A, 2B) with regard to the rigidity of the envelope (2A, 2B), wherein the enforcement layer (7) is applied to the sheet portion by spraying or a similar solution discharging method and/or printed and especially ink-jetted to the sheet portion.

## Patentansprüche

1. Formstabiles Pad (1) zur Verwendung in einer Kaffeemaschine zum Zubereiten von 1 oder 2 Tassen eines Getränks, bereitgestellt mit einer Hülle (2A, 2B) mit einem Innenraum (4), welcher mit einem Getränkezubereitungsprodukt (6) gefüllt ist, wobei das Getränkezubereitungsprodukt (6) ein mit einem Fluid zu extrahierendes Produkt und/oder ein in einem Fluid lösliches Produkt umfasst, wobei die Hülle (2A, 2B) von einer ersten scheibenförmigen Lage (2A) und einer zweiten scheibenförmigen Lage (2B) gebildet wird, die angrenzend an ihre Längsränder (8) miteinander verbunden sind, wobei die miteinander verbundenen Teile der ersten Lage (2A) und der zweiten Lage (2B) eine Siegelnaht (10) bilden und wobei die erste Lage (2A) und die zweite Lage (2B) jeweils einen Filter bilden, der ein Fluid hindurchleiten kann und der eine Sperre für das Getränkezubereitungsprodukt (6) bildet, wobei bei Verwendung mit der Kaffeemaschine dem Pad (1) ein Fluid wie Wasser unter Druck zugeführt wird, so dass das Fluid in das Pad (1) gedrückt wird, um das Getränk zu erhalten, das daraufhin das Pad (1) verlässt, **dadurch gekennzeichnet, dass** mindestens eine von der ersten Lage (2A) und der zweiten Lage (2B) mindestens einen Lagenabschnitt aufweist, der eine beschichtete Verstärkungsschicht (7) eines Bindemittels so umfasst, dass sie mindestens lokal einen verstärkten Bereich zum Bereitstellen einer formstabilen Gestaltung für die jeweilige Lage bereitstellt, wobei die Verstärkungsschicht (7) durch Sprühen oder ein ähnliches Lösungsabgabeverfahren auf den Lagenabschnitt aufgetragen wird und/oder auf den Lagenabschnitt gedruckt und insbesondere tintenstrahlgedruckt wird.

2. Pad (1) nach Anspruch 1, **dadurch gekennzeichnet, dass** die Verstärkungsschicht (7) so aufgetragen wird, dass sie mindestens lokal verstärkte Bereiche auf der Hülle (2A, 2B) im Hinblick auf die Rigidität der Hülle (2A, 2B) bereitstellt.

3. Pad (1) nach einem der vorstehenden Ansprüche, **dadurch gekennzeichnet, dass** die Verstärkungsschicht (7) als Lösung, die das Bindemittel und insbesondere chemische Bindemittel umfasst, und/oder als Lösung, die filmbildende Polymere umfasst, und/oder derart aufgetragen wird, dass das Bindemittel Fasern oder ähnliche Materialkomponenten des Lagenabschnittmaterials vernetzt.

4. Pad (1) nach einem der vorstehenden Ansprüche, **dadurch gekennzeichnet, dass** die Verstärkungsschicht (7) ein lebensmitteltaugliches Bindemittel und/oder Bindemittel mit Farbstoff und/oder Farbpigmenten umfasst.

5. Pad (1) nach einem der vorstehenden Ansprüche, **dadurch gekennzeichnet, dass** die Verstärkungsschicht (7) homogen auf den Lagenabschnitt aufgetragen wird und/oder als wasserbasierte Beschichtung aufgetragen wird.

6. Pad (1) nach einem der vorstehenden Ansprüche, **dadurch gekennzeichnet, dass** das Bindemittel Milchproteine und/oder Lipide und/oder Chitosan und/oder Mischungen von Chitosan und/oder Polyvinylalkohol (PVOH) und/oder Bindemittel ausgewählt aus der Gruppe umfassend Saccharoseester, Calciumpectinat, Calciumascorbat, N,O-Carboxymethylchitosan, Weizengluten, Calciumacetat, Maisprotein, Polymere von Harz, Zucker, Kakaofeststoffe, Weißmacher, Molkenprotein, Stärke, Propylenglycolalginat, Guargummi, Hydroxylpropylmethylcellulose (HPMC), Hydroxylethylcellulose, Polyethylenglycol, Pullulan, Kohlenhydrate, Galactomannan, umfasst.

7. Pad (1) nach einem der vorstehenden Ansprüche, **dadurch gekennzeichnet, dass** die Verstärkungsschicht (7) mindestens teilweise über den Filter, der von der ersten Lage (2A) und/oder der zweiten Lage gebildet wird, und insbesondere mindestens teilweise in einer Linienstruktur über die Hülle (2A, 2B) und/oder mindestens teilweise in einer Netzstruktur über die Hülle (2A, 2B) und/oder mindestens teilweise in einer Musterstruktur über die Hülle (2A, 2B) verläuft und/oder als Design, Marke oder ähnliches grafisches Element bereitgestellt ist.

8. Pad (1) nach einem der vorstehenden Ansprüche, **dadurch gekennzeichnet, dass** die Verstärkungsschicht (7) so angeordnet ist, dass sie Einlassöffnungen zum Eindringen des Fluids in den Innenraum (4) des Pads (1) umfasst und/oder dass sie Auslassöffnungen zum Austreten des Fluids aus dem Innenraum (4) des Pads (1) umfasst.

9. Pad (1) nach einem der vorstehenden Ansprüche, **dadurch gekennzeichnet, dass** die Lagenabschnitte, die das Bindemittel umfassen, in Bereichen der Hülle (2A, 2B) angeordnet sind, wo keine Fluiddurchlässigkeit erforderlich ist, vorzugsweise im Siegelnahtbereich und/oder in vertikalen Wandbereichen der Hülle (2A, 2B).

10. Pad (1) nach einem der vorstehenden Ansprüche, **dadurch gekennzeichnet, dass** die Verstärkungsschicht (7) in Streifen (7) oder ähnlichen Linien angeordnet ist, die in Radialrichtung des Pads (1) und/oder einer Umfangsrichtung, insbesondere in sich geschlossen, verlaufen, um eine axiale Achse des Pads (1) verlaufen, zum Beispiel in der Siegelnaht (10) oder der Lage innerhalb eines von der Siegelnaht (10) umschlossenen Bereichs, so dass der Streifen einen kleineren Durchmesser als die Siegelnaht (10) aufweist.

11. Pad (1) nach einem der vorstehenden Ansprüche, **dadurch gekennzeichnet, dass** die erste und/oder die zweite Lage (2B) so geformt sind, dass sie mit mindestens einer Rille (80, 90) oder einer Vielzahl von Rillen versehen sind, um die Formbewahrung der zweiten Lage zu erhöhen, wobei die Rillen zum Beispiel in Radialrichtung des Pads (1) verlaufen und/oder die mindestens eine Rille eine in sich geschlossene Umfangsrille bildet, die um eine axiale Achse des Pads (1) zum Beispiel in der Siegelnaht (10) oder auf der Lage innerhalb eines von der Siegelnaht (10) umschlossenen Bereichs verläuft, so dass die Rille einen kleineren Durchmesser als die Siegelnaht (10) aufweist, und wobei die Verstärkungsschicht (7) mindestens teilweise entlang und insbesondere in und/oder auf den Rillen angeordnet ist.

12. Pad (1) nach einem der vorstehenden Ansprüche, **dadurch gekennzeichnet, dass** die mindestens eine Lage zu mindestens 50 Gewichtsprozent aus einem Kunststoff besteht; und vorzugsweise zu mindestens 60 Gewichtsprozent aus einem Kunststoff besteht, während der Kunststoff insbesondere aus Kunststofffasern und/oder Kunststofffilamenten besteht; vorzugsweise zu mindestens 70 Gewichtsprozent, vorzugsweise zu mindestens 80 Gewichtsprozent und mehr bevorzugt zu mindestens 90 Gewichtsprozent, aus einem Kunststoff besteht, während der Kunststoff insbesondere aus Kunststofffasern und/oder Kunststofffilamenten besteht.

13. Pad (1) nach einem der vorstehenden Ansprüche, **dadurch gekennzeichnet, dass** die mindestens eine Lage aus einem porösen und/oder Vliesmaterial hergestellt ist.

14. Pad (1) nach einem der Ansprüche 12 oder 13, **dadurch gekennzeichnet, dass** das Vliesmaterial aus dem Kunststoff hergestellt ist und/oder dass der Kunststoff in mindestens einem Teil des Vliesmaterials in der Form von Fasern und/oder Filamenten, die, mindestens zum Teil, aus dem Kunststoff hergestellt sind, spezieller in der Form von Kunststofffasern und/oder Kunststofffilamenten, noch spezieller in der Form von Cellulosefasern und/oder Cellulosefilamenten, die mit einer Kunststoffbeschichtung versehen sind, vorliegt.

15. Pad (1) nach einem der vorstehenden Ansprüche 12 bis 14, **dadurch gekennzeichnet, dass** die mindestens eine Lage aus einer Vielzahl von Materialschichten, die aneinander gebunden sind, aufgebaut ist, spezieller dadurch, dass die mindestens eine Lage eine erste Schicht, die mindestens zum Großteil aus Cellulosefasern und/oder Cellulosefilamenten besteht, und eine zweite Schicht, die teilweise aus dem Kunststoff und teilweise aus Cellulosefasern und/oder Cellulosefilamenten hergestellt ist, umfasst.

16. Pad (1) nach einem der vorstehenden Ansprüche 12 bis 15, **dadurch gekennzeichnet, dass** der Kunststoff aus Kunststoffpolymeren besteht oder Kunststoffpolymere umfasst, wobei die Kunststoffpolymere PE, PET, PETP, coPET, LLDPE, CPP, PLA und/oder PP umfassen.

17. Pad (1) nach einem der vorstehenden Ansprüche, **dadurch gekennzeichnet, dass** die mindestens eine Lage eine erste Schicht, die mindestens zum Großteil aus PETP besteht, und eine zweite Schicht, die mindestens zum Großteil aus CPP besteht, umfasst.

18. Pad (1) nach einem der vorstehenden Ansprüche, **dadurch gekennzeichnet, dass** die mindestens eine Lage aus einer Polyesterfaser und/oder aus Polymilchsäure- (PLA-) Fasern und/oder aus einem biologisch abbaubaren Material, das nach Gebrauch mindestens zum Großteil vollständig biologisch abbaubar ist, und/oder aus PLA-Fasern mit einem Schmelzpunkt von 145-175 Grad Celsius und PLA-Fasern mit einem Schmelzpunkt von 105-165 Grad Celsius und/oder aus Filterpapier hergestellt ist und/oder vorzugsweise mit Cellulosefasern versehen ist, und/oder dadurch, dass die erste Lage (2A) mit mindestens 70 Gew.-% Cellulose, mehr bevorzugt mit mindestens 80 Gew.-% Cellulose, noch mehr bevorzugt mit mindestens 90 Gew.-% Cellulose, versehen ist, während möglicherweise die erste Lage (2A) zu übrigen Teilen aus einem Kunststoff besteht und/oder dass die erste Lage (2A) zu weniger als 30 % Kunststoffpolymere umfasst.

19. System, versehen mit einem Pad (1) nach einem der vorstehenden Ansprüche und eine Kaffeemaschine, wobei die Kaffeemaschine mit einer Halterung (16) zum Aufnehmen des Pads (1), einer Abdeckung (18) zum Schließen der Halterung (16) und Fluidmitteln zum Erzeugen eines Fluidstroms unter Druck versehen ist, wobei die Halterung (16) mit mindestens einer Getränkeausflussöffnung versehen ist und die Abdeckung (18) mit mindestens einer Fluideinflussöffnung versehen ist, welche in Fluidverbindung mit den Fluidmitteln zum Liefern des Fluidstroms zu den Fluidöffnungen stehen, so dass das Fluid unter Druck zu der ersten Lage (2A) des Pads (1) geführt wird, so dass das Fluid zum Zubereiten des Getränks in dem Pad (1) durch das Pad (1) gepresst wird, das Getränk das Pad (1) durch die zweite Lage verlässt, um damit fortzufahren, die Halterung (16) durch die mindestens eine Getränkeausflussöffnung zu verlassen.

20. Verwendung eines Pads (1) nach einem der vorstehenden Ansprüche 1 bis 18, wobei das Pad (1) in einer Halterung (16) platziert wird, die mit mindestens einer Getränkeausflussöffnung versehen ist, wobei die Halterung (16) mit dem Pad (1) darin mit einer Abdeckung (18) verschlossen wird, die mit mindestens einer Fluideinflussöffnung versehen ist, und ein Fluid unter Druck zu der mindestens einen Fluideinflussöffnung geführt wird, so dass das Fluid durch die erste Lage (2A) zu dem Getränkezubereitungsprodukt (6) in dem Pad (1) zum Zubereiten des Getränks geführt wird, und wobei das Getränk das Pad (1) durch die zweite Lage verlässt, wobei das Getränk daraufhin die Halterung (16) durch die mindestens eine Getränkeausflussöffnung verlässt.

21. Verfahren zum Zubereiten eines Getränks mit einem Pad (1) nach einem der vorstehenden Ansprüche 1 bis 18, wobei das Pad (1) in einer Halterung (16) platziert wird, die mit mindestens einer Getränkeausflussöffnung versehen ist, wobei die Halterung (16) mit dem Pad (1) darin mit einer Abdeckung (18) verschlossen wird, die mit mindestens einer Fluideinflussöffnung versehen ist, und ein Fluid unter Druck zu der mindestens einen Fluidöffnung geführt wird, so dass das Fluid durch die erste Lage (2A) zu dem Getränkezubereitungsprodukt (6) in dem Pad (1) zum Zubereiten des Getränks geführt wird, und wobei das Getränk das Pad (1) durch die zweite Lage (2B) verlässt, wobei das Getränk daraufhin die Halterung (16) durch die mindestens eine Getränkeausflussöffnung verlässt.

22. Verfahren zum Herstellen eines Pads (1) nach einem der vorstehenden Ansprüche 1 bis 18, wobei
in Schritt a. eine Einrichtung einer dritten Lage (60), einer vierten Lage (50) und des Getränkezubereitungsprodukts (6) erfolgt, wobei sich das Getränkezubereitungsprodukt (6) zwischen der dritten Lage (60) und der vierten Lage (50) befindet, und dann
in Schritt b. die dritte Lage (60) und die vierte Lage (50) miteinander verbunden werden, wodurch die Siegelnaht (10) gebildet wird, so dass das Getränkezubereitungsprodukt (6) in dem Innenraum (4) eingeschlossen ist, **dadurch gekennzeichnet, dass**
in einem Schritt h. eine Verstärkungsschicht (7), die ein Bindemittel umfasst, auf einen Lagenabschnitt der ersten Lage (2A) und/oder der zweiten Lage so aufgetragen wird, dass sie mindestens lokal verstärkte Bereiche an der Hülle (2A, 2B) im Hinblick auf die Rigidität der Hülle (2A, 2B) bereitstellt, wobei die Verstärkungsschicht (7) durch Sprühen oder ein ähnliches Lösungsabgabeverfahren auf den Lagenabschnitt aufgetragen wird und/oder auf den Lagenabschnitt gedruckt und insbesondere tintenstrahlgedruckt wird.

## Revendications

1. Dosette à conservation de forme (1) pour une utilisation dans une machine à café pour la préparation de 1 ou 2 tasses de boisson, pourvue d'une enveloppe (2A, 2B) avec un espace intérieur (4) qui est rempli d'un produit de préparation de boisson (6) pour la préparation de la boisson, dans laquelle le produit de préparation de boisson (6) comprend un produit à extraire avec un fluide et/ou un produit soluble dans un fluide, dans laquelle l'enveloppe (2A, 2B) est formée par une première feuille en forme de disque (2A) et une deuxième feuille en forme de disque (2B) qui sont interconnectées à côté de leurs bords longitudinaux (8), dans laquelle les parties interconnectées de la première feuille (2A) et de la deuxième feuille (2B) forment un joint de scellage (10) et dans laquelle la première feuille (2A) et la deuxième feuille (2B) forment chacune un filtre qui peut laisser passer un fluide et qui forme une barrière au produit de préparation de boisson (6), dans laquelle, en cours d'utilisation, avec la machine à café, un fluide tel que de l'eau est alimenté, sous pression, vers la dosette (1) de sorte que le fluide soit pressé à travers la dosette (1) pour obtenir la boisson qui à ce moment quitte la dosette (1), **caractérisée en ce qu'au** moins l'une parmi la première feuille (2A) et la deuxième feuille (2B) a au moins une partie de feuille comprenant une couche de renfort revêtue (7) d'un matériau liant d'une manière telle qu'elle fournit au moins localement une zone renforcée pour fournir une conception à conservation de forme à la feuille respective, dans laquelle la couche de renfort (7) est appliquée à la partie de feuille par pulvérisation ou par un procédé similaire de décharge de solution et/ou est imprimée et spécialement imprimée par jet d'encre sur la partie de feuille.

2. Dosette (1) selon la revendication 1, **caractérisée en ce que** la couche de renfort (7) est appliquée d'une manière telle qu'elle fournit des zones au moins localement renforcées sur l'enveloppe (2A, 2B) en ce qui concerne la rigidité de l'enveloppe (2A, 2B).

3. Dosette (1) selon l'une quelconque des revendications précédentes, **caractérisée en ce que** la couche de renfort (7) est appliquée en tant que solution comprenant le matériau liant et spécialement des liants chimiques et/ou en tant que solution comprenant des polymères filmogènes et/ou d'une manière telle que le matériau liant soit des fibres de réticulation ou des composants de matériau similaires du matériau de partie de feuille.

4. Dosette (1) selon l'une quelconque des revendications précédentes, **caractérisée en ce que** la couche de renfort (7) comprend un matériau liant de qualité alimentaire et/ou un matériau liant avec une teinture et/ou des pigments colorants.

5. Dosette (1) selon l'une quelconque des revendications précédentes, **caractérisée en ce que** la couche de renfort (7) est appliquée de manière homogène à la partie de feuille et/ou est appliquée en tant que revêtement à base d'eau.

6. Dosette (1) selon l'une quelconque des revendications précédentes, **caractérisée en ce que** le matériau liant comprend des protéines de lait et/ou des lipides et/ou du chitosane et/ou des mélanges de chitosane et/ou de l'alcool polyvinylique (PVOH) et/ou des liants choisis dans le groupe comprenant des esters de saccharose, du pectinate de calcium, de l'ascorbate de calcium, du N,O-carboxyméthyl-chitosane, du gluten de blé, de l'acétate de calcium, une protéine de maïs, des polymères de résine, du sucre, des matières solides de cacao, un colorant à café, une protéine de lactosérum, de l'amidon, de l'alginate de propylène glycol, de la gomme de guar, de l'hydroxypropylméthyl-cellulose (HPMC), de l'hydroxyéthylcellulose, du polyéthylène glycol, du pullulane, des glucides, du galactomannane.

7. Dosette (1) selon l'une quelconque des revendications précédentes, **caractérisée en ce que** la couche de renfort (7) s'étend au moins partiellement par-dessus le filtre formé par la première feuille (2A) et/ou la deuxième feuille et spécialement au moins partiellement dans une structure de ligne par-dessus l'enveloppe (2A, 2B) et/ou au moins partiellement dans une structure de treillis par-dessus l'enveloppe (2A, 2B) et/ou au moins partiellement dans une structure de motif par-dessus l'enveloppe (2A, 2B) et/ou est fournie en tant que dessin, marque ou élément graphique similaire.

8. Dosette (1) selon l'une quelconque des revendications précédentes, **caractérisée en ce que** la couche de renfort (7) est agencée d'une manière telle qu'elle comprend des ouvertures d'entrée permettant au fluide d'entrer dans l'espace intérieur (4) de la dosette (1) et/ou de telle sorte qu'elle comprenne des ouvertures de sortie permettant au fluide de quitter l'espace intérieur (4) de la dosette (1).

9. Dosette (1) selon l'une quelconque des revendications précédentes, **caractérisée en ce que** les parties de feuille comprenant le matériau liant sont agencées au niveau de zones de l'enveloppe (2A, 2B) où aucune perméabilité aux fluides n'est requise, de préférence au niveau de la zone de joint de scellage et/ou au niveau de zones de paroi verticale de l'enveloppe (2A, 2B).

10. Dosette (1) selon l'une quelconque des revendications précédentes, **caractérisée en ce que** la couche de renfort (7) est agencée en bandes (7) ou lignes similaires s'étendant dans une direction radiale de la dosette (1) et/ou une direction circonférentielle, spécialement fermées sur elles-mêmes, s'étendant autour d'un axe axial de la dosette (1), par exemple, dans le joint de scellage (10) ou la feuille à l'intérieur d'une zone enfermée par le joint de scellage (10) de sorte que la bande ait un diamètre plus petit que le joint de scellage (10).

11. Dosette (1) selon l'une quelconque des revendications précédentes, **caractérisée en ce que** la première et/ou la deuxième feuille (2B) sont profilées de telle sorte qu'elles soient pourvues d'au moins une rainure (80, 90) ou d'une multiplicité de rainures pour augmenter la conservation de forme de la deuxième feuille, les rainures s'étendant, par exemple, dans une direction radiale de la dosette (1) et/ou l'au moins une rainure constituant une rainure circonférentielle fermée sur elle-même, s'étendant autour d'un axe axial de la dosette (1), par exemple, dans le joint de scellage (10) ou sur la feuille à l'intérieur d'une zone enfermée par le joint de scellage (10) de sorte que la rainure ait un diamètre plus petit que le joint de scellage (10) et dans laquelle la couche de renfort (7) est au moins partiellement agencée le long des rainures et spécialement dans et/ou sur celles-ci.

12. Dosette (1) selon l'une quelconque des revendications précédentes, **caractérisée en ce que** l'au moins une feuille est constituée d'un plastique pour au moins 50 pour cent en poids ; et est constituée de préférence d'un plastique pour au moins 60 pour cent en poids, alors que, en particulier, le plastique est constitué de fibres en plastique et/ou de filaments en plastique ; est constituée de préférence d'un plastique pour au moins 70 pour cent en poids, de préférence pour au moins 80 pour cent en poids et plus préférablement, pour au moins 90 pour cent en poids, alors que, en particulier, le plastique est constitué de fibres en plastique et/ou de filaments en plastique.

13. Dosette (1) selon l'une quelconque des revendications précédentes, **caractérisée en ce que** l'au moins une feuille est constituée d'un matériau poreux et/ou non tissé.

14. Dosette (1) selon l'une quelconque des revendications 12 ou 13, **caractérisée en ce que** le matériau non tissé est constitué du plastique et/ou **en ce que** le plastique est présent dans au moins une partie du matériau non tissé sous la forme de fibres et/ou de filaments qui, au moins pour une partie, sont constitués du plastique, plus particulièrement sous la forme de fibres en plastique et/ou de filaments en plastique, encore plus particulièrement sous la forme de fibres de cellulose et/ou de filaments de cellulose qui sont pourvus d'un revêtement plastique.

15. Dosette (1) selon l'une quelconque des revendications précédentes 12 à 14, **caractérisée en ce que** l'au moins une feuille est construite à partir d'une pluralité de couches de matériau qui sont liées les unes aux autres, plus particulièrement **en ce que** l'au moins une feuille comprend une première couche qui est constituée au moins essentiellement de fibres de cellulose et/ou de filaments de cellulose et une deuxième couche qui est constituée partiellement du plastique et partiellement de fibres de cellulose et/ou de filaments de cellulose.

16. Dosette (1) selon l'une quelconque des revendications précédentes 12 à 15, **caractérisée en ce que** le plastique est constitué de polymères plastiques ou comprend des polymères plastiques, dans laquelle les polymères plastiques comprennent PE, PET, PETP, coPET, LLDPE, CPP, PLA et/ou PP.

17. Dosette (1) selon l'une quelconque des revendications précédentes, **caractérisée en ce que** l'au moins une feuille comprend une première couche constituée au moins essentiellement de PETP et une deuxième couche constituée au moins essentiellement de CPP.

18. Dosette (1) selon l'une quelconque des revendications précédentes, **caractérisée en ce que** l'au moins une feuille est constituée d'une fibre de polyester et/ou de fibres d'acide polylactique (PLA) et/ou d'un matériau biodégradable qui est biodégradable de manière au moins essentiellement complète après utilisation et/ou de fibres de PLA qui ont un point de fusion de 145 à 175 degrés Celsius et de fibres de PLA qui ont un point de fusion de 105 à 165 degrés Celsius et/ou de papier filtre et/ou est de préférence pourvue de fibres de cellulose et/ou **en ce que** la première feuille (2A) est pourvue d'au moins 70 % en poids de cellulose, plus préférablement d'au moins 80 % en poids de cellulose, encore plus préférablement d'au moins 90 % en poids de cellulose, alors qu'éventuellement la première feuille (2A) pour le reste est constituée d'un plastique et/ou **en ce que** la première feuille (2A) comprend moins de 30 % de polymères plastiques.

19. Système pourvu d'une dosette (1) selon l'une quelconque des revendications précédentes et d'une machine à café, dans lequel la machine à café est pourvue d'un support (16) destiné à recevoir la dosette (1), d'un couvercle (18) destiné à fermer le support (16) et d'un moyen de fluide destiné à générer un écoulement de fluide sous pression, dans lequel le support (16) est pourvu d'au moins une ouverture d'écoulement de boisson et le couvercle (18) est pourvu d'au moins une ouverture d'arrivée de fluide, lesquelles sont en communication fluidique avec le moyen de fluide pour alimenter l'écoulement de fluide aux ouvertures de fluide de sorte que le fluide soit alimenté sous pression à la première feuille (2A) de la dosette (1) de sorte que le fluide soit pressé à travers la dosette (1) pour la préparation d'une boisson dans la dosette (1), la boisson quittant la dosette (1) via la deuxième feuille pour en arriver à quitter le support (16) via l'au moins une ouverture d'écoulement de boisson.

20. Utilisation d'une dosette (1) selon l'une quelconque des revendications 1 à 18 précédentes, dans laquelle la dosette (1) est placée dans un support (16) qui est pourvu d'au moins une ouverture d'écoulement de boisson, le support (16) avec la dosette (1) en son sein est fermé avec un couvercle (18) qui est pourvu d'au moins une ouverture d'arrivée de fluide et un fluide est alimenté sous pression à l'au moins une ouverture d'arrivée de fluide de sorte que le fluide soit alimenté via la première feuille (2A) au produit de préparation de boisson (6) dans la dosette (1) pour préparer la boisson et dans laquelle la boisson quitte la dosette (1) via la deuxième feuille, dans laquelle la boisson en arrive à quitter le support (16) via l'au moins une ouverture d'écoulement de boisson.

21. Procédé de préparation d'une boisson avec une dosette (1) selon l'une quelconque des revendications 1 à 18 précédentes, dans lequel la dosette (1) est placée dans un support (16) qui est pourvu d'au moins une ouverture d'écoulement de boisson, le support (16) avec la dosette (1) en son sein est fermé avec un couvercle (18) qui est pourvu d'au moins une ouverture d'arrivée de fluide et un fluide est alimenté sous pression à l'au moins une ouverture de fluide de sorte que le fluide soit alimenté via la première feuille (2A) au produit de préparation de boisson (6) dans la dosette (1) pour préparer la boisson et dans lequel la boisson quitte la dosette (1) via la deuxième feuille (2B), dans lequel la boisson en arrive à quitter le support (16) via l'au moins une ouverture d'écoulement de boisson.

22. Procédé de fabrication d'une dosette (1) selon l'une quelconque des revendications 1 à 18 précédentes, dans lequel
à l'étape a., une mise en place d'une troisième feuille (60), d'une quatrième feuille (50) et du produit de préparation de boisson (6) est faite, avec le produit de préparation de boisson (6) situé entre la troisième feuille (60) et la quatrième feuille (50), puis
à l'étape b., la troisième feuille (60) et la quatrième feuille (50) sont réunies, en formant de ce fait le joint de scellage (10) de sorte que le produit de préparation de boisson (6) soit inclus dans l'espace intérieur (4), **caractérisé en ce que**
dans une étape h., une couche de renfort (7) comprenant un matériau liant est appliquée à une partie de feuille de la première feuille (2A) et/ou de la deuxième feuille d'une manière telle qu'il fournit des zones au moins localement renforcées sur l'enveloppe (2A, 2B) en ce qui concerne la rigidité de l'enveloppe (2A, 2B), dans lequel la couche de renfort (7) est appliquée sur la partie de feuille par pulvérisation ou par un procédé similaire de décharge de solution et/ou imprimée et spécialement imprimée par jet d'encre sur la partie de feuille.
